# EUROPEAN PATENT SPECIFICATION

(11) **EP 4 316 170 B1**
(45) Date of publication and mention of the grant of the patent: **15.10.2025**
(21) Application number: 22781497.7
(22) Date of filing: 25.03.2022
(51) Int. Cl.: H04L 5/00, H04W 74/00, H04W 72/0453, H04W 74/08

(54) **CELL GROUP ACTIVATION IN WIRELESS COMMUNICATION SYSTEM**
ZELLGRUPPENAKTIVIERUNG IN EINEM DRAHTLOSEN KOMMUNIKATIONSSYSTEM
ACTIVATION DE GROUPE DE CELLULES DANS UN SYSTÈME DE COMMUNICATION SANS FIL

(30) Priority: 02.04.2021 KR 20210043046
(43) Date of publication of application: 07.02.2024
(73) Proprietor: LG Electronics Inc., Yeongdeungpo-gu Seoul 07336 (KR)
(72) Inventor: KIM, Hongsuk, Seoul 06772 (KR); JUNG, Sunghoon, Seoul 06772 (KR); KIM, Sangwon, Seoul 06772 (KR)
(74) Representative: Plasseraud IP
(86) International application number: PCT/KR2022/004187
(87) International publication number: WO 2022/211378

(56) References cited:
- WO-A1-2020/034840
- KR-A- 20190 143 314
- US-A1- 2019 357 092
- US-A1- 2020 296 759
- INTERDIGITAL INC: "Measurements and maintenance of UL synch with a deactivated SCG", vol. RAN WG2, no. Electronic; 20210412 - 20210420, 1 April 2021 (2021-04-01), XP051992220, Retrieved from the Internet <URL:https://ftp.3gpp.org/tsg_ran/WG2_RL2/TSGR2_113bis-e/Docs/R2-2103682.zip R2-2103682 - Measurements and maintenance of UL synch with a deactivated SCG.doc> [retrieved on 20210401]
- LG ELECTRONICS INC: "Time-efficient SCG (De)activation mechanism", vol. RAN WG2, no. Online; 20210125 - 20210205, 15 January 2021 (2021-01-15), XP051973838, Retrieved from the Internet <URL:https://ftp.3gpp.org/tsg_ran/WG2_RL2/TSGR2_113-e/Docs/R2-2100730.zip R2-2100730 Time Efficient SCG DeActivation mechanism_fin.docx> [retrieved on 20210115]
- SAMSUNG (RAPPORTEUR): "Inclusive language review for TS 36.331", 3GPP DRAFT; R2-2101988, vol. RAN WG2, 4 February 2021 (2021-02-04), pages 1 - 1063, XP051976112

## Description

### Technical Field

The present disclosure relates to a cell group activation in wireless communications.

### Background Art

3rd generation partnership project (3GPP) long-term evolution (LTE) is a technology for enabling high-speed packet communications. Many schemes have been proposed for the LTE objective including those that aim to reduce user and provider costs, improve service quality, and expand and improve coverage and system capacity. The 3GPP LTE requires reduced cost per bit, increased service availability, flexible use of a frequency band, a simple structure, an open interface, and adequate power consumption of a terminal as an upper-level requirement.

Work has started in international telecommunication union (ITU) and 3GPP to develop requirements and specifications for new radio (NR) systems. 3GPP has to identify and develop the technology components needed for successfully standardizing the new RAT timely satisfying both the urgent market needs, and the more long-term requirements set forth by the ITU radio communication sector (ITU-R) international mobile telecommunications (IMT)-2020 process. Further, the NR should be able to use any spectrum band ranging at least up to 100 GHz that may be made available for wireless communications even in a more distant future.

The NR targets a single technical framework addressing all usage scenarios, requirements and deployment scenarios including enhanced mobile broadband (eMBB), massive machine-type-communications (mMTC), ultra-reliable and low latency communications (URLLC), etc. The NR shall be inherently forward compatible.

In wireless communications, a UE may be configured with dual connectivity (DC) of a master cell group (MCG) and a secondary cell group (SCG). The UE may perform a transmission and reception with the MCG and the SCG in DC. However, in some cases, to achieve power saving purpose, one of the cell groups i.e., SCG may be deactivated, and the UE may perform a transmission and reception with the MCG while the SCG is deactivated. The deactivated SCG may be activated later when needed. In 3GPP Draft R2-2103682, 3GPP RAN WG2 Meeting #113-bis-e, April 12-April 20, 2021, InterDigital Inc. address some issues concerning measurements and the maintenance of UL sync with a deactivated SCG and propose that the PSCell be configured with a dormant BWP, and upon SCG deactivation, the UE switches the PSCell to the dormant BWP, and that, upon SCG reactivation, the UE switches the PSCell to a non-dormant BWP.

### Disclosure

### Technical Problem

An aspect of the present disclosure is to provide method and apparatus for a cell group SCG activation in a wireless communication system.

### Solution to Problem

According to an embodiment of the present disclosure, a method performed by a user equipment (UE) configured to operate in a wireless communication system comprises: receiving, on a first cell group, an instruction to activate a second cell group; after receiving the instruction, determining that a random access procedure is not needed for activation of the second cell group based on i) a time alignment associated with the second cell group being valid, and ii) a beam quality of a beam for the second cell group being higher than a threshold; autonomously performing a frequency band switching from a first frequency band to a second frequency band based on the random access procedure not being needed; and performing a transmission to the second cell group in the second frequency band without the random access procedure to the second cell group, not monitoring a control channel on one or more cells of the second cell group in the first frequency band, monitoring a control channel on the one or more cells of the second cell group in the second frequency band, wherein a random access configuration is unavailable in the second frequency band, and wherein the random access configuration comprises a resource configuration used to perform the random access procedure.

According to an embodiment of the present disclosure, a user equipment (UE) configured to operate in a wireless communication system comprises: at least one transceiver; at least processor; and at least one computer memory operably connectable to the at least one processor and storing instructions that, based on being executed by the at least one processor, perform operations comprising: receiving, on a first cell group via the at least one transceiver, an instruction to activate a second cell group; after receiving the instruction, determining that a random access procedure is not needed for activation of the second cell group based on i) a time alignment associated with the second cell group, and ii) a beam quality of a beam for the second cell group being higher than a threshold; autonomously performing a frequency band switching from a first frequency band to a second frequency band based on the random access procedure not being needed; and performing a transmission to the second cell group in the second frequency band without the random access procedure to the second cell group, not monitoring a control channel on one or more cells of the second cell group in the first frequency band, monitoring a control channel on the one or more cells of the second cell group in the second frequency band, wherein a random access configuration is unavailable in the second frequency band, and wherein the random access configuration comprises a resource configuration used to perform the random access procedure.

According to an embodiment (not claimed) of the present disclosure, at least one computer readable medium (CRM) stores instructions that, based on being executed by at least one processor, perform operations comprising: receiving an instruction to activate a cell group via another cell group; after receiving the instruction, determining whether to skip a random access procedure to the cell group based on at least one of i) a validity of a time alignment between the UE and the cell group or ii) a beam quality of a beam selected for the cell group; performing a frequency band switching from a first frequency band to a second frequency band based on a determination to skip the random access procedure; and performing a transmission to the cell group in the second frequency band while skipping the random access procedure to the cell group. The UE stops monitoring a control channel on one or more cells in the cell group in the first frequency band. The UE monitors a control channel on the one or more cells in the cell group in the second frequency band.

According to an embodiment (not claimed) of the present disclosure, an apparatus for configured to operate in a wireless communication system comprises: at least processor; and at least one computer memory operably connectable to the at least one processor, wherein the at least one processor is configured to perform operations comprising: receiving an instruction to activate a cell group via another cell group; after receiving the instruction, determining whether to skip a random access procedure to the cell group based on at least one of i) a validity of a time alignment between the UE and the cell group or ii) a beam quality of a beam selected for the cell group; performing a frequency band switching from a first frequency band to a second frequency band based on a determination to skip the random access procedure; and performing a transmission to the cell group in the second frequency band while skipping the random access procedure to the cell group. The UE stops monitoring a control channel on one or more cells in the cell group in the first frequency band. The UE monitors a control channel on the one or more cells in the cell group in the second frequency band.

According to an embodiment (not claimed) of the present disclosure, a method performed by a network node configured to operate in a wireless communication system comprises: transmitting, to a user equipment (UE), a configuration for at least one of a first cell group and a second cell group; transmitting, to the UE, a configuration for a first frequency band in which the UE stops monitoring a control channel on one or more cells in the second cell group; transmitting, to the UE, an instruction to activate the second cell group via the first cell group; and receiving, from the UE, a transmission in a second frequency band in which the UE monitors a control channel on the one or more cells in the cell group, with a random access procedure by the UE to the second cell group skipped. Whether to skip the random access procedure to the second cell group is determined based on at least one of i) a validity of a time alignment between the UE and the second cell group, or ii) a beam quality of a beam selected for the second cell group. A frequency band switching is performed from the first frequency band to the second frequency band based on a determination to skip the random access procedure.

According to an embodiment (not claimed) of the present disclosure, a network node configured to operate in a wireless communication system, the network node comprising: at least one transceiver; at least processor; and at least one computer memory operably connectable to the at least one processor and storing instructions that, based on being executed by the at least one processor, perform operations comprising: transmitting, to a user equipment (UE), a configuration for at least one of a first cell group and a second cell group; transmitting, to the UE, a configuration for a first frequency band in which the UE stops monitoring a control channel on one or more cells in the second cell group; transmitting, to the UE, an instruction to activate the second cell group via the first cell group; and receiving, from the UE, a transmission in a second frequency band in which the UE monitors a control channel on the one or more cells in the cell group, with a random access procedure by the UE to the second cell group skipped. Whether to skip the random access procedure to the second cell group is determined based on at least one of i) a validity of a time alignment between the UE and the second cell group, or ii) a beam quality of a beam selected for the second cell group. A frequency band switching is performed from the first frequency band to the second frequency band based on a determination to skip the random access procedure.

### Advantageous Effects of Invention

The present disclosure can have various advantageous effects.

For example, the network can perform a data transmission on time after the UE activates SCG successfully without the random access procedure on SCG. This is because the network may not know quickly unless the UE indicates that SCG is activated without the RACH procedure.

For example, since the UE may avoid to select new BWP which includes RACH configuration for random access procedure, the network can control the situation that many other UEs select a BWP which includes RACH configuration.

Advantageous effects which can be obtained through specific embodiments of the present disclosure are not limited to the advantageous effects listed above. For example, there may be a variety of technical effects that a person having ordinary skill in the related art can understand and/or derive from the present disclosure. Accordingly, the specific effects of the present disclosure are not limited to those explicitly described herein, but may include various effects that may be understood or derived from the technical features of the present disclosure.

### Brief Description of Drawings

FIG. 1 shows an example of a communication system to which implementations of the present disclosure is applied.
FIG. 2 shows an example of wireless devices to which implementations of the present disclosure is applied.
FIG. 3 shows an example of a wireless device to which implementations of the present disclosure is applied.
FIG. 4 shows another example of wireless devices to which implementations of the present disclosure is applied.
FIG. 5 shows an example of UE to which implementations of the present disclosure is applied.
FIGs. 6 and 7 show an example of protocol stacks in a 3GPP based wireless communication system to which implementations of the present disclosure is applied.
FIG. 8 shows a frame structure in a 3GPP based wireless communication system to which implementations of the present disclosure is applied.
FIG. 9 shows a data flow example in the 3GPP NR system to which implementations of the present disclosure is applied.
FIG. 10 shows an example of a BWP configuration to which technical features of the present disclosure is applied.
FIG. 11 shows an example of a DC architecture to which technical features of the present disclosure can be applied.
FIG. 12 shows an example of a method performed by a UE according to an embodiment of the present disclosure.
FIG. 13 shows an example of a method for skipping a random access procedure to an SCG upon an SCG activation according to an embodiment of the present disclosure.
FIG. 14 shows an example of a method performed by a network node according to an embodiment of the present disclosure.

### Mode for the Invention

The following techniques, apparatuses, and systems may be applied to a variety of wireless multiple access systems. Examples of the multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multicarrier frequency division multiple access (MC-FDMA) system. CDMA may be embodied through radio technology such as universal terrestrial radio access (UTRA) or CDMA2000. TDMA may be embodied through radio technology such as global system for mobile communications (GSM), general packet radio service (GPRS), or enhanced data rates for GSM evolution (EDGE). OFDMA may be embodied through radio technology such as institute of electrical and electronics engineers (IEEE) 802.11 (Wi-Fi), IEEE 802.16 (WiMAX), IEEE 802.20, or evolved UTRA (E-UTRA). UTRA is a part of a universal mobile telecommunications system (UMTS). 3rd generation partnership project (3GPP) long term evolution (LTE) is a part of evolved UMTS (E-UMTS) using E-UTRA. 3GPP LTE employs OFDMA in DL and SC-FDMA in UL. LTE-advanced (LTE-A) is an evolved version of 3GPP LTE.

For convenience of description, implementations of the present disclosure are mainly described in regards to a 3GPP based wireless communication system. However, the technical features of the present disclosure are not limited thereto. For example, although the following detailed description is given based on a mobile communication system corresponding to a 3GPP based wireless communication system, aspects of the present disclosure that are not limited to 3GPP based wireless communication system are applicable to other mobile communication systems.

For terms and technologies which are not specifically described among the terms of and technologies employed in the present disclosure, the wireless communication standard documents published before the present disclosure may be referenced.

In the present disclosure, "A or B" may mean "only A", "only B", or "both A and B". In other words, "A or B" in the present disclosure may be interpreted as "A and/or B". For example, "A, B or C" in the present disclosure may mean "only A", "only B", "only C", or "any combination of A, B and C".

In the present disclosure, slash (/) or comma (,) may mean "and/or". For example, "A/ B" may mean "A and/or B". Accordingly, "A/B" may mean "only A", "only B", or "both A and B". For example, "A, B, C" may mean "A, B or C".

In the present disclosure, "at least one of A and B" may mean "only A", "only B" or "both A and B". In addition, the expression "at least one of A or B" or "at least one of A and/or B" in the present disclosure may be interpreted as same as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C".

Also, parentheses used in the present disclosure may mean "for example". In detail, when it is shown as "control information (PDCCH)", "PDCCH" may be proposed as an example of "control information". In other words, "control information" in the present disclosure is not limited to "PDCCH", and "PDCCH" may be proposed as an example of "control information". In addition, even when shown as "control information (i.e., PDCCH)", "PDCCH" may be proposed as an example of "control information".

Technical features that are separately described in one drawing in the present disclosure may be implemented separately or simultaneously.

Throughout the disclosure, the terms 'radio access network (RAN) node', 'base station', 'eNB', 'gNB' and 'cell' may be used interchangeably. Further, a UE may be a kind of a wireless device, and throughout the disclosure, the terms 'UE' and 'wireless device' may be used interchangeably.

Throughout the disclosure, the terms 'cell quality', 'signal strength', 'signal quality', 'channel state', 'channel quality', ' channel state/reference signal received power (RSRP)' and ' reference signal received quality (RSRQ)' may be used interchangeably.

Although not limited thereto, various descriptions, functions, procedures, suggestions, methods and/or operational flowcharts of the present disclosure disclosed herein can be applied to various fields requiring wireless communication and/or connection (e.g., 5G) between devices.

Hereinafter, the present disclosure will be described in more detail with reference to drawings. The same reference numerals in the following drawings and/or descriptions may refer to the same and/or corresponding hardware blocks, software blocks, and/or functional blocks unless otherwise indicated.

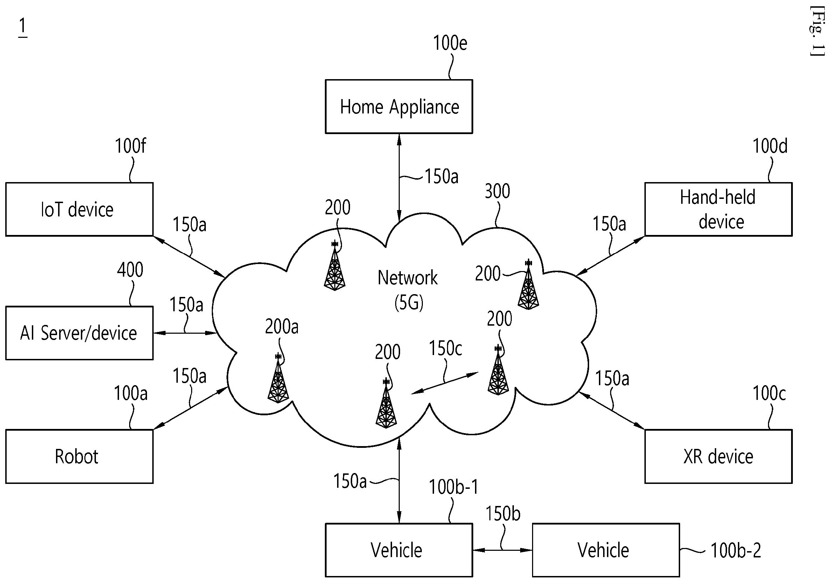

FIG. 1 shows an example of a communication system to which implementations of the present disclosure is applied.

The 5G usage scenarios shown in FIG. 1 are only exemplary, and the technical features of the present disclosure can be applied to other 5G usage scenarios which are not shown in FIG. 1.

Three main requirement categories for 5G include (1) a category of enhanced mobile broadband (eMBB), (2) a category of massive machine type communication (mMTC), and (3) a category of ultra-reliable and low latency communications (URLLC).

Partial use cases may require a plurality of categories for optimization and other use cases may focus only upon one key performance indicator (KPI). 5G supports such various use cases using a flexible and reliable method.

eMBB far surpasses basic mobile Internet access and covers abundant bidirectional work and media and entertainment applications in cloud and augmented reality. Data is one of 5G core motive forces and, in a 5G era, a dedicated voice service may not be provided for the first time. In 5G, it is expected that voice will be simply processed as an application program using data connection provided by a communication system. Main causes for increased traffic volume are due to an increase in the size of content and an increase in the number of applications requiring high data transmission rate. A streaming service (of audio and video), conversational video, and mobile Internet access will be more widely used as more devices are connected to the Internet. These many application programs require connectivity of an always turned-on state in order to push real-time information and alarm for users. Cloud storage and applications are rapidly increasing in a mobile communication platform and may be applied to both work and entertainment. The cloud storage is a special use case which accelerates growth of uplink data transmission rate. 5G is also used for remote work of cloud. When a tactile interface is used, 5G demands much lower end-to-end latency to maintain user good experience. Entertainment, for example, cloud gaming and video streaming, is another core element which increases demand for mobile broadband capability. Entertainment is essential for a smartphone and a tablet in any place including high mobility environments such as a train, a vehicle, and an airplane. Other use cases are augmented reality for entertainment and information search. In this case, the augmented reality requires very low latency and instantaneous data volume.

In addition, one of the most expected 5G use cases relates a function capable of smoothly connecting embedded sensors in all fields, i.e., mMTC. It is expected that the number of potential Internet-of-things (IoT) devices will reach 204 hundred million up to the year of 2020. An industrial IoT is one of categories of performing a main role enabling a smart city, asset tracking, smart utility, agriculture, and security infrastructure through 5G.

URLLC includes a new service that will change industry through remote control of main infrastructure and an ultra-reliable/available low-latency link such as a self-driving vehicle. A level of reliability and latency is essential to control a smart grid, automatize industry, achieve robotics, and control and adjust a drone.

5G is a means of providing streaming evaluated as a few hundred megabits per second to gigabits per second and may complement fiber-to-the-home (FTTH) and cable-based broadband (or DOCSIS). Such fast speed is needed to deliver TV in resolution of 4K or more (6K, 8K, and more), as well as virtual reality and augmented reality. Virtual reality (VR) and augmented reality (AR) applications include almost immersive sports games. A specific application program may require a special network configuration. For example, for VR games, gaming companies need to incorporate a core server into an edge network server of a network operator in order to minimize latency.

Automotive is expected to be a new important motivated force in 5G together with many use cases for mobile communication for vehicles. For example, entertainment for passengers requires high simultaneous capacity and mobile broadband with high mobility. This is because future users continue to expect connection of high quality regardless of their locations and speeds. Another use case of an automotive field is an AR dashboard. The AR dashboard causes a driver to identify an object in the dark in addition to an object seen from a front window and displays a distance from the object and a movement of the object by overlapping information talking to the driver. In the future, a wireless module enables communication between vehicles, information exchange between a vehicle and supporting infrastructure, and information exchange between a vehicle and other connected devices (e.g., devices accompanied by a pedestrian). A safety system guides alternative courses of a behavior so that a driver may drive more safely drive, thereby lowering the danger of an accident. The next stage will be a remotely controlled or self-driven vehicle. This requires very high reliability and very fast communication between different self-driven vehicles and between a vehicle and infrastructure. In the future, a self-driven vehicle will perform all driving activities and a driver will focus only upon abnormal traffic that the vehicle cannot identify. Technical requirements of a self-driven vehicle demand ultra-low latency and ultra-high reliability so that traffic safety is increased to a level that cannot be achieved by human being.

A smart city and a smart home/building mentioned as a smart society will be embedded in a high-density wireless sensor network. A distributed network of an intelligent sensor will identify conditions for costs and energy-efficient maintenance of a city or a home. Similar configurations may be performed for respective households. All of temperature sensors, window and heating controllers, burglar alarms, and home appliances are wirelessly connected. Many of these sensors are typically low in data transmission rate, power, and cost. However, real-time HD video may be demanded by a specific type of device to perform monitoring.

Consumption and distribution of energy including heat or gas is distributed at a higher level so that automated control of the distribution sensor network is demanded. The smart grid collects information and connects the sensors to each other using digital information and communication technology so as to act according to the collected information. Since this information may include behaviors of a supply company and a consumer, the smart grid may improve distribution of fuels such as electricity by a method having efficiency, reliability, economic feasibility, production sustainability, and automation. The smart grid may also be regarded as another sensor network having low latency.

Mission critical application (e.g., e-health) is one of 5G use scenarios. A health part contains many application programs capable of enjoying benefit of mobile communication. A communication system may support remote treatment that provides clinical treatment in a faraway place. Remote treatment may aid in reducing a barrier against distance and improve access to medical services that cannot be continuously available in a faraway rural area. Remote treatment is also used to perform important treatment and save lives in an emergency situation. The wireless sensor network based on mobile communication may provide remote monitoring and sensors for parameters such as heart rate and blood pressure.

Wireless and mobile communication gradually becomes important in the field of an industrial application. Wiring is high in installation and maintenance cost. Therefore, a possibility of replacing a cable with reconstructible wireless links is an attractive opportunity in many industrial fields. However, in order to achieve this replacement, it is necessary for wireless connection to be established with latency, reliability, and capacity similar to those of the cable and management of wireless connection needs to be simplified. Low latency and a very low error probability are new requirements when connection to 5G is needed.

Logistics and freight tracking are important use cases for mobile communication that enables inventory and package tracking anywhere using a location-based information system. The use cases of logistics and freight typically demand low data rate but require location information with a wide range and reliability.

Referring to FIG. 1, the communication system 1 includes wireless devices 100a to 100f, base stations (BSs) 200, and a network 300. Although FIG. 1 illustrates a 5G network as an example of the network of the communication system 1, the implementations of the present disclosure are not limited to the 5G system, and can be applied to the future communication system beyond the 5G system.

The BSs 200 and the network 300 may be implemented as wireless devices and a specific wireless device may operate as a BS/network node with respect to other wireless devices.

The wireless devices 100a to 100f represent devices performing communication using radio access technology (RAT) (e.g., 5G new RAT (NR)) or LTE) and may be referred to as communication/radio/5G devices. The wireless devices 100a to 100f may include, without being limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of performing communication between vehicles. The vehicles may include an unmanned aerial vehicle (UAV) (e.g., a drone). The XR device may include an AR/VR/Mixed Reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter.

In the present disclosure, the wireless devices 100a to 100f may be called user equipments (UEs). A UE may include, for example, a cellular phone, a smartphone, a laptop computer, a digital broadcast terminal, a personal digital assistant (PDA), a portable multimedia player (PMP), a navigation system, a slate personal computer (PC), a tablet PC, an ultrabook, a vehicle, a vehicle having an autonomous traveling function, a connected car, an UAV, an AI module, a robot, an AR device, a VR device, an MR device, a hologram device, a public safety device, an MTC device, an IoT device, a medical device, a FinTech device (or a financial device), a security device, a weather/environment device, a device related to a 5G service, or a device related to a fourth industrial revolution field.

The UAV may be, for example, an aircraft aviated by a wireless control signal without a human being onboard.

The VR device may include, for example, a device for implementing an object or a background of the virtual world. The AR device may include, for example, a device implemented by connecting an object or a background of the virtual world to an object or a background of the real world. The MR device may include, for example, a device implemented by merging an object or a background of the virtual world into an object or a background of the real world. The hologram device may include, for example, a device for implementing a stereoscopic image of 360 degrees by recording and reproducing stereoscopic information, using an interference phenomenon of light generated when two laser lights called holography meet.

The public safety device may include, for example, an image relay device or an image device that is wearable on the body of a user.

The MTC device and the IoT device may be, for example, devices that do not require direct human intervention or manipulation. For example, the MTC device and the IoT device may include smartmeters, vending machines, thermometers, smartbulbs, door locks, or various sensors.

Here, the radio communication technologies implemented in the wireless devices in the present disclosure may include narrowband internet-of-things (NB-IoT) technology for low-power communication as well as LTE, NR and 6G. For example, NB-IoT technology may be an example of low power wide area network (LPWAN) technology, may be implemented in specifications such as LTE Cat NB1 and/or LTE Cat NB2, and may not be limited to the above-mentioned names. Additionally and/or alternatively, the radio communication technologies implemented in the wireless devices in the present disclosure may communicate based on LTE-M technology. For example, LTE-M technology may be an example of LPWAN technology and be called by various names such as enhanced machine type communication (eMTC). For example, LTE-M technology may be implemented in at least one of the various specifications, such as 1) LTE Cat 0, 2) LTE Cat M1, 3) LTE Cat M2, 4) LTE non-bandwidth limited (non-BL), 5) LTE-MTC, 6) LTE Machine Type Communication, and/or 7) LTE M, and may not be limited to the above-mentioned names. Additionally and/or alternatively, the radio communication technologies implemented in the wireless devices in the present disclosure may include at least one of ZigBee, Bluetooth, and/or LPWAN which take into account low-power communication, and may not be limited to the above-mentioned names. For example, ZigBee technology may generate personal area networks (PANs) associated with small/low-power digital communication based on various specifications such as IEEE 802.15.4 and may be called various names.

The medical device may be, for example, a device used for the purpose of diagnosing, treating, relieving, curing, or preventing disease. For example, the medical device may be a device used for the purpose of diagnosing, treating, relieving, or correcting injury or impairment. For example, the medical device may be a device used for the purpose of inspecting, replacing, or modifying a structure or a function. For example, the medical device may be a device used for the purpose of adjusting pregnancy. For example, the medical device may include a device for treatment, a device for operation, a device for (in vitro) diagnosis, a hearing aid, or a device for procedure.

The security device may be, for example, a device installed to prevent a danger that may arise and to maintain safety. For example, the security device may be a camera, a closed-circuit TV (CCTV), a recorder, or a black box.

The FinTech device may be, for example, a device capable of providing a financial service such as mobile payment. For example, the FinTech device may include a payment device or a point of sales (POS) system.

The weather/environment device may include, for example, a device for monitoring or predicting a weather/environment.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, a 5G (e.g., NR) network, and a beyond-5G network. Although the wireless devices 100a to 100f may communicate with each other through the BSs 200/network 300, the wireless devices 100a to 100f may perform direct communication (e.g., sidelink communication) with each other without passing through the BSs 200/network 300. For example, the vehicles 100b-1 and 100b-2 may perform direct communication (e.g., vehicle-to-vehicle (V2V)/vehicle-to-everything (V2X) communication). The IoT device (e.g., a sensor) may perform direct communication with other IoT devices (e.g., sensors) or other wireless devices 100a to 100f.

Wireless communication/connections 150a, 150b and 150c may be established between the wireless devices 100a to 100f and/or between wireless device 100a to 100f and BS 200 and/or between BSs 200. Herein, the wireless communication/connections may be established through various RATs (e.g., 5G NR) such as uplink/downlink communication 150a, sidelink communication (or device-to-device (D2D) communication) 150b, inter-base station communication 150c (e.g., relay, integrated access and backhaul (IAB)), etc. The wireless devices 100a to 100f and the BSs 200/the wireless devices 100a to 100f may transmit/receive radio signals to/from each other through the wireless communication/connections 150a, 150b and 150c. For example, the wireless communication/connections 150a, 150b and 150c may transmit/receive signals through various physical channels. To this end, at least a part of various configuration information configuring processes, various signal processing processes (e.g., channel encoding/decoding, modulation/demodulation, and resource mapping/de-mapping), and resource allocating processes, for transmitting/receiving radio signals, may be performed based on the various proposals of the present disclosure.

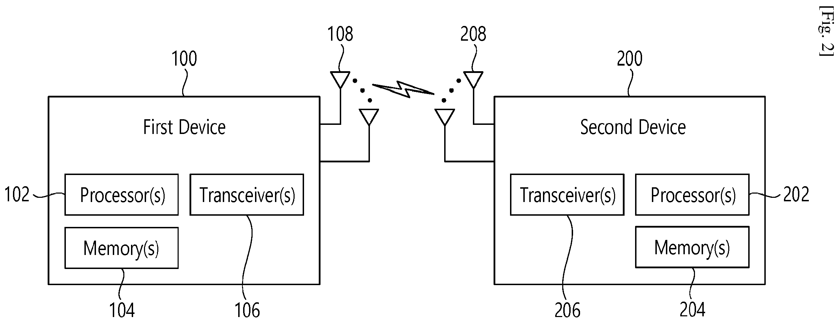

FIG. 2 shows an example of wireless devices to which implementations of the present disclosure is applied.

Referring to FIG. 2, a first wireless device 100 and a second wireless device 200 may transmit/receive radio signals to/from an external device through a variety of RATs (e.g., LTE and NR). In FIG. 2, {the first wireless device 100 and the second wireless device 200} may correspond to at least one of {the wireless device 100a to 100f and the BS 200}, {the wireless device 100a to 100f and the wireless device 100a to 100f} and/or {the BS 200 and the BS 200} of FIG. 1.

The first wireless device 100 may include one or more processors 102 and one or more memories 104 and additionally further include one or more transceivers 106 and/ or one or more antennas 108. The processor(s) 102 may control the memory(s) 104 and/or the transceiver(s) 106 and may be configured to implement the descriptions, functions, procedures, suggestions, methods and/or operational flowcharts described in the present disclosure. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver(s) 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, suggestions, methods and/or operational flowcharts described in the present disclosure. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with radio frequency (RF) unit(s). In the present disclosure, the first wireless device 100 may represent a communication modem/circuit/chip.

The second wireless device 200 may include one or more processors 202 and one or more memories 204 and additionally further include one or more transceivers 206 and/ or one or more antennas 208. The processor(s) 202 may control the memory(s) 204 and/or the transceiver(s) 206 and may be configured to implement the descriptions, functions, procedures, suggestions, methods and/or operational flowcharts described in the present disclosure. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, suggestions, methods and/or operational flowcharts described in the present disclosure. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the second wireless device 200 may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as physical (PHY) layer, media access control (MAC) layer, radio link control (RLC) layer, packet data convergence protocol (PDCP) layer, radio resource control (RRC) layer, and service data adaptation protocol (SDAP) layer). The one or more processors 102 and 202 may generate one or more protocol data units (PDUs) and/or one or more service data unit (SDUs) according to the descriptions, functions, procedures, suggestions, methods and/or operational flowcharts disclosed in the present disclosure. The one or more processors 102 and 202 may generate messages, control information, data, or information according to the descriptions, functions, procedures, suggestions, methods and/or operational flowcharts disclosed in the present disclosure. The one or more processors 102 and 202 may generate signals (e.g., baseband signals) including PDUs, SDUs, messages, control information, data, or information according to the descriptions, functions, procedures, suggestions, methods and/or operational flowcharts disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, suggestions, methods and/or operational flowcharts disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. descriptions, functions, procedures, suggestions, methods and/or operational flowcharts disclosed in the present disclosure may be implemented using firmware or software and the firmware or software may be configured to include the modules, procedures, or functions. Firmware or software configured to perform the descriptions, functions, procedures, suggestions, methods and/or operational flowcharts disclosed in the present disclosure may be included in the one or more processors 102 and 202 or stored in the one or more memories 104 and 204 so as to be driven by the one or more processors 102 and 202. The descriptions, functions, procedures, suggestions, methods and/or operational flowcharts disclosed in the present disclosure may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the descriptions, functions, procedures, suggestions, methods and/or operational flowcharts disclosed in the present disclosure, to one or more other devices. The one or more transceivers 106 and 206 may receive user data, control information, and/or radio signals/channels, mentioned in the descriptions, functions, procedures, suggestions, methods and/or operational flowcharts disclosed in the present disclosure, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices.

The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, suggestions, methods and/or operational flowcharts disclosed in the present disclosure, through the one or more antennas 108 and 208. In the present disclosure, the one or more antennas may be a plurality of physical antennas or a plurality of logical antennas (e.g., antenna ports).

The one or more transceivers 106 and 206 may convert received radio signals/ channels, etc., from RF band signals into baseband signals in order to process received user data, control information, radio signals/channels, etc., using the one or more processors 102 and 202. The one or more transceivers 106 and 206 may convert the user data, control information, radio signals/channels, etc., processed using the one or more processors 102 and 202 from the base band signals into the RF band signals. To this end, the one or more transceivers 106 and 206 may include (analog) oscillators and/or filters. For example, the transceivers 106 and 206 can up-convert OFDM baseband signals to a carrier frequency by their (analog) oscillators and/or filters under the control of the processors 102 and 202 and transmit the up-converted OFDM signals at the carrier frequency. The transceivers 106 and 206 may receive OFDM signals at a carrier frequency and down-convert the OFDM signals into OFDM baseband signals by their (analog) oscillators and/or filters under the control of the transceivers 102 and 202.

In the implementations of the present disclosure, a UE may operate as a transmitting device in uplink (UL) and as a receiving device in downlink (DL). In the implementations of the present disclosure, a BS may operate as a receiving device in UL and as a transmitting device in DL. Hereinafter, for convenience of description, it is mainly assumed that the first wireless device 100 acts as the UE, and the second wireless device 200 acts as the BS. For example, the processor(s) 102 connected to, mounted on or launched in the first wireless device 100 may be configured to perform the UE behavior according to an implementation of the present disclosure or control the transceiver(s) 106 to perform the UE behavior according to an implementation of the present disclosure. The processor(s) 202 connected to, mounted on or launched in the second wireless device 200 may be configured to perform the BS behavior according to an implementation of the present disclosure or control the transceiver(s) 206 to perform the BS behavior according to an implementation of the present disclosure.

In the present disclosure, a BS is also referred to as a node B (NB), an eNode B (eNB), or a gNB.

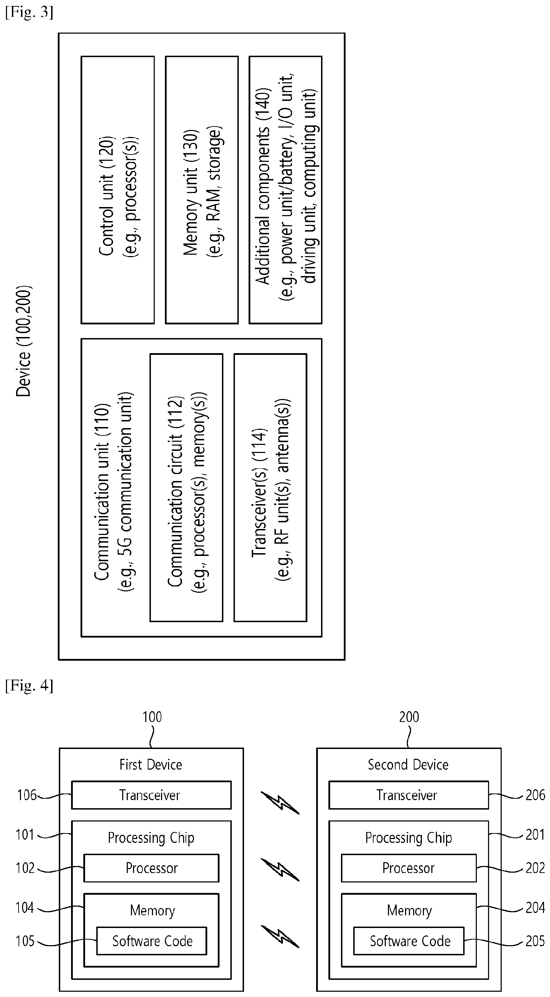

FIG. 3 shows an example of a wireless device to which implementations of the present disclosure is applied.

The wireless device may be implemented in various forms according to a use-case/service (refer to FIG. 1).

Referring to FIG. 3, wireless devices 100 and 200 may correspond to the wireless devices 100 and 200 of FIG. 2 and may be configured by various elements, components, units/portions, and/or modules. For example, each of the wireless devices 100 and 200 may include a communication unit 110, a control unit 120, a memory unit 130, and additional components 140. The communication unit 110 may include a communication circuit 112 and transceiver(s) 114. For example, the communication circuit 112 may include the one or more processors 102 and 202 of FIG. 2 and/or the one or more memories 104 and 204 of FIG. 2. For example, the transceiver(s) 114 may include the one or more transceivers 106 and 206 of FIG. 2 and/or the one or more antennas 108 and 208 of FIG. 2. The control unit 120 is electrically connected to the communication unit 110, the memory 130, and the additional components 140 and controls overall operation of each of the wireless devices 100 and 200. For example, the control unit 120 may control an electric/mechanical operation of each of the wireless devices 100 and 200 based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of the wireless devices 100 and 200. For example, the additional components 140 may include at least one of a power unit/battery, input/output (I/O) unit (e.g., audio I/O port, video I/O port), a driving unit, and a computing unit. The wireless devices 100 and 200 may be implemented in the form of, without being limited to, the robot (100a of FIG. 1), the vehicles (100b-1 and 100b-2 of FIG. 1), the XR device (100c of FIG. 1), the hand-held device (100d of FIG. 1), the home appliance (100e of FIG. 1), the IoT device (100f of FIG. 1), a digital broadcast terminal, a hologram device, a public safety device, an MTC device, a medicine device, a FinTech device (or a finance device), a security device, a climate/environment device, the AI server/device (400 of FIG. 1), the BSs (200 of FIG. 1), a network node, etc. The wireless devices 100 and 200 may be used in a mobile or fixed place according to a use-example/service.

In FIG. 3, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor (AP), an electronic control unit (ECU), a graphical processing unit, and a memory control processor. As another example, the memory 130 may be configured by a RAM, a DRAM, a ROM, a flash memory, a volatile memory, a non-volatile memory, and/or a combination thereof.

FIG. 4 shows another example of wireless devices to which implementations of the present disclosure is applied.

Referring to FIG. 4, wireless devices 100 and 200 may correspond to the wireless devices 100 and 200 of FIG. 2 and may be configured by various elements, components, units/portions, and/or modules.

The first wireless device 100 may include at least one transceiver, such as a transceiver 106, and at least one processing chip, such as a processing chip 101. The processing chip 101 may include at least one processor, such a processor 102, and at least one memory, such as a memory 104. The memory 104 may be operably connectable to the processor 102. The memory 104 may store various types of information and/or instructions. The memory 104 may store a software code 105 which implements instructions that, when executed by the processor 102, perform the descriptions, functions, procedures, suggestions, methods and/or operational flowcharts disclosed in the present disclosure. For example, the software code 105 may implement instructions that, when executed by the processor 102, perform the descriptions, functions, procedures, suggestions, methods and/or operational flowcharts disclosed in the present disclosure. For example, the software code 105 may control the processor 102 to perform one or more protocols. For example, the software code 105 may control the processor 102 may perform one or more layers of the radio interface protocol.

The second wireless device 200 may include at least one transceiver, such as a transceiver 206, and at least one processing chip, such as a processing chip 201. The processing chip 201 may include at least one processor, such a processor 202, and at least one memory, such as a memory 204. The memory 204 may be operably connectable to the processor 202. The memory 204 may store various types of information and/or instructions. The memory 204 may store a software code 205 which implements instructions that, when executed by the processor 202, perform the descriptions, functions, procedures, suggestions, methods and/or operational flowcharts disclosed in the present disclosure. For example, the software code 205 may implement instructions that, when executed by the processor 202, perform the descriptions, functions, procedures, suggestions, methods and/or operational flowcharts disclosed in the present disclosure. For example, the software code 205 may control the processor 202 to perform one or more protocols. For example, the software code 205 may control the processor 202 may perform one or more layers of the radio interface protocol.

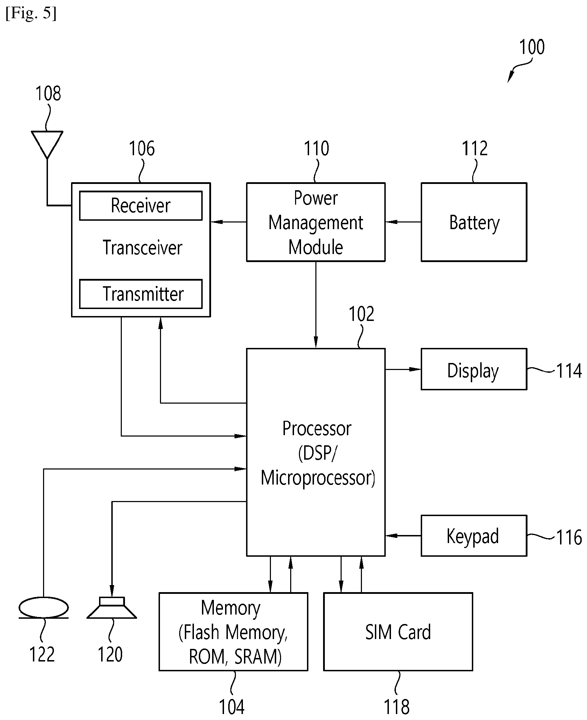

FIG. 5 shows an example of UE to which implementations of the present disclosure is applied.

Referring to FIG. 5, a UE 100 may correspond to the first wireless device 100 of FIG. 2 and/or the first wireless device 100 of FIG. 4.

A UE 100 includes a processor 102, a memory 104, a transceiver 106, one or more antennas 108, a power management module 110, a battery 1112, a display 114, a keypad 116, a subscriber identification module (SIM) card 118, a speaker 120, and a microphone 122.

The processor 102 may be configured to implement the descriptions, functions, procedures, suggestions, methods and/or operational flowcharts disclosed in the present disclosure. The processor 102 may be configured to control one or more other components of the UE 100 to implement the descriptions, functions, procedures, suggestions, methods and/or operational flowcharts disclosed in the present disclosure. Layers of the radio interface protocol may be implemented in the processor 102. The processor 102 may include ASIC, other chipset, logic circuit and/or data processing device. The processor 102 may be an application processor. The processor 102 may include at least one of a digital signal processor (DSP), a central processing unit (CPU), a graphics processing unit (GPU), a modem (modulator and demodulator). An example of the processor 102 may be found in SNAPDRAGON^{™} series of processors made by Qualcomm^{®}, EXYNOS^{™} series of processors made by Samsung^{®}, A series of processors made by Apple^{®}, HELIO^{™} series of processors made by MediaTek^{®}, ATOM^{™} series of processors made by Intel^{®} or a corresponding next generation processor.

The memory 104 is operatively coupled with the processor 102 and stores a variety of information to operate the processor 102. The memory 104 may include ROM, RAM, flash memory, memory card, storage medium and/or other storage device. When the embodiments are implemented in software, the techniques described herein can be implemented with modules (e.g., procedures, functions, etc.) that perform the descriptions, functions, procedures, suggestions, methods and/or operational flowcharts disclosed in the present disclosure. The modules can be stored in the memory 104 and executed by the processor 102. The memory 104 can be implemented within the processor 102 or external to the processor 102 in which case those can be communicatively coupled to the processor 102 via various means as is known in the art.

The transceiver 106 is operatively coupled with the processor 102, and transmits and/ or receives a radio signal. The transceiver 106 includes a transmitter and a receiver. The transceiver 106 may include baseband circuitry to process radio frequency signals. The transceiver 106 controls the one or more antennas 108 to transmit and/or receive a radio signal.

The power management module 110 manages power for the processor 102 and/or the transceiver 106. The battery 112 supplies power to the power management module 110.

The display 114 outputs results processed by the processor 102. The keypad 116 receives inputs to be used by the processor 102. The keypad 16 may be shown on the display 114.

The SIM card 118 is an integrated circuit that is intended to securely store the international mobile subscriber identity (IMSI) number and its related key, which are used to identify and authenticate subscribers on mobile telephony devices (such as mobile phones and computers). It is also possible to store contact information on many SIM cards.

The speaker 120 outputs sound-related results processed by the processor 102. The microphone 122 receives sound-related inputs to be used by the processor 102.

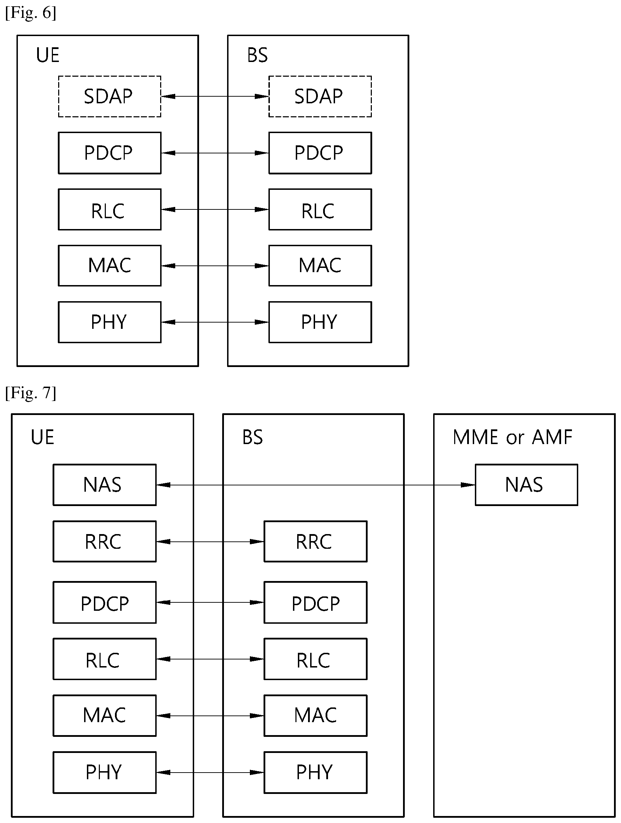

FIGs. 6 and 7 show an example of protocol stacks in a 3GPP based wireless communication system to which implementations of the present disclosure is applied.

In particular, FIG. 6 illustrates an example of a radio interface user plane protocol stack between a UE and a BS and FIG. 7 illustrates an example of a radio interface control plane protocol stack between a UE and a BS. The control plane refers to a path through which control messages used to manage call by a UE and a network are transported. The user plane refers to a path through which data generated in an application layer, for example, voice data or Internet packet data are transported. Referring to FIG. 6, the user plane protocol stack may be divided into Layer 1 (i.e., a PHY layer) and Layer 2. Referring to FIG. 7, the control plane protocol stack may be divided into Layer 1 (i.e., a PHY layer), Layer 2, Layer 3 (e.g., an RRC layer), and a non-access stratum (NAS) layer. Layer 1, Layer 2 and Layer 3 are referred to as an access stratum (AS).

In the 3GPP LTE system, the Layer 2 is split into the following sublayers: MAC, RLC, and PDCP. In the 3GPP NR system, the Layer 2 is split into the following sublayers: MAC, RLC, PDCP and SDAP. The PHY layer offers to the MAC sublayer transport channels, the MAC sublayer offers to the RLC sublayer logical channels, the RLC sublayer offers to the PDCP sublayer RLC channels, the PDCP sublayer offers to the SDAP sublayer radio bearers. The SDAP sublayer offers to 5G core network quality of service (QoS) flows.

In the 3GPP NR system, the main services and functions of the MAC sublayer include: mapping between logical channels and transport channels; multiplexing/ de-multiplexing of MAC SDUs belonging to one or different logical channels into/ from transport blocks (TB) delivered to/from the physical layer on transport channels; scheduling information reporting; error correction through hybrid automatic repeat request (HARQ) (one HARQ entity per cell in case of carrier aggregation (CA)); priority handling between UEs by means of dynamic scheduling; priority handling between logical channels of one UE by means of logical channel prioritization; padding. A single MAC entity may support multiple numerologies, transmission timings and cells. Mapping restrictions in logical channel prioritization control which numerology(ies), cell(s), and transmission timing(s) a logical channel can use.

Different kinds of data transfer services are offered by MAC. To accommodate different kinds of data transfer services, multiple types of logical channels are defined, i.e., each supporting transfer of a particular type of information. Each logical channel type is defined by what type of information is transferred. Logical channels are classified into two groups: control channels and traffic channels. Control channels are used for the transfer of control plane information only, and traffic channels are used for the transfer of user plane information only. Broadcast control channel (BCCH) is a downlink logical channel for broadcasting system control information, paging control channel (PCCH) is a downlink logical channel that transfers paging information, system information change notifications and indications of ongoing public warning service (PWS) broadcasts, common control channel (CCCH) is a logical channel for transmitting control information between UEs and network and used for UEs having no RRC connection with the network, and dedicated control channel (DCCH) is a point-to-point bi-directional logical channel that transmits dedicated control information between a UE and the network and used by UEs having an RRC connection. Dedicated traffic channel (DTCH) is a point-to-point logical channel, dedicated to one UE, for the transfer of user information. A DTCH can exist in both uplink and downlink. In downlink, the following connections between logical channels and transport channels exist: BCCH can be mapped to broadcast channel (BCH); BCCH can be mapped to downlink shared channel (DL-SCH); PCCH can be mapped to paging channel (PCH); CCCH can be mapped to DL-SCH; DCCH can be mapped to DL-SCH; and DTCH can be mapped to DL-SCH. In uplink, the following connections between logical channels and transport channels exist: CCCH can be mapped to uplink shared channel (UL-SCH); DCCH can be mapped to UL-SCH; and DTCH can be mapped to UL-SCH.

The RLC sublayer supports three transmission modes: transparent mode (TM), unacknowledged mode (UM), and acknowledged node (AM). The RLC configuration is per logical channel with no dependency on numerologies and/or transmission durations. In the 3GPP NR system, the main services and functions of the RLC sublayer depend on the transmission mode and include: transfer of upper layer PDUs; sequence numbering independent of the one in PDCP (UM and AM); error correction through ARQ (AM only); segmentation (AM and UM) and re-segmentation (AM only) of RLC SDUs; reassembly of SDU (AM and UM); duplicate detection (AM only); RLC SDU discard (AM and UM); RLC re-establishment; protocol error detection (AM only).

In the 3GPP NR system, the main services and functions of the PDCP sublayer for the user plane include: sequence numbering; header compression and decompression using robust header compression (ROHC); transfer of user data; reordering and duplicate detection; in-order delivery; PDCP PDU routing (in case of split bearers); retransmission of PDCP SDUs; ciphering, deciphering and integrity protection; PDCP SDU discard; PDCP re-establishment and data recovery for RLC AM; PDCP status reporting for RLC AM; duplication of PDCP PDUs and duplicate discard indication to lower layers. The main services and functions of the PDCP sublayer for the control plane include: sequence numbering; ciphering, deciphering and integrity protection; transfer of control plane data; reordering and duplicate detection; in-order delivery; duplication of PDCP PDUs and duplicate discard indication to lower layers.

In the 3GPP NR system, the main services and functions of SDAP include: mapping between a QoS flow and a data radio bearer; marking QoS flow ID (QFI) in both DL and UL packets. A single protocol entity of SDAP is configured for each individual PDU session.

In the 3GPP NR system, the main services and functions of the RRC sublayer include: broadcast of system information related to AS and NAS; paging initiated by 5GC or NG-RAN; establishment, maintenance and release of an RRC connection between the UE and NG-RAN; security functions including key management; establishment, configuration, maintenance and release of signaling radio bearers (SRBs) and data radio bearers (DRBs); mobility functions (including: handover and context transfer, UE cell selection and reselection and control of cell selection and reselection, inter-RAT mobility); QoS management functions; UE measurement reporting and control of the reporting; detection of and recovery from radio link failure; NAS message transfer to/from NAS from/to UE.

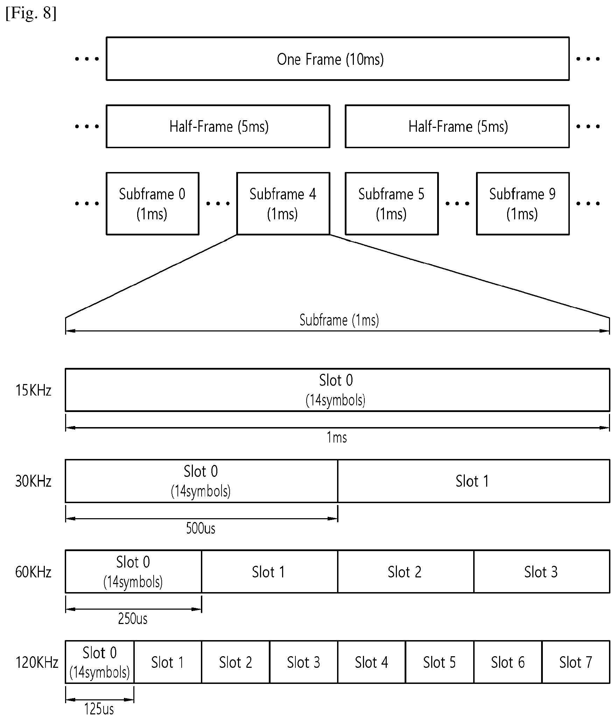

FIG. 8 shows a frame structure in a 3GPP based wireless communication system to which implementations of the present disclosure is applied.

The frame structure shown in FIG. 8 is purely exemplary and the number of subframes, the number of slots, and/or the number of symbols in a frame may be variously changed. In the 3GPP based wireless communication system, OFDM numerologies (e.g., subcarrier spacing (SCS), transmission time interval (TTI) duration) may be differently configured between a plurality of cells aggregated for one UE. For example, if a UE is configured with different SCSs for cells aggregated for the cell, an (absolute time) duration of a time resource (e.g., a subframe, a slot, or a TTI) including the same number of symbols may be different among the aggregated cells. Herein, symbols may include OFDM symbols (or CP-OFDM symbols), SC-FDMA symbols (or discrete Fourier transform-spread-OFDM (DFT-s-OFDM) symbols).

Referring to FIG. 8, downlink and uplink transmissions are organized into frames. Each frame has T_{f} = 10ms duration. Each frame is divided into two half-frames, where each of the half-frames has 5ms duration. Each half-frame consists of 5 subframes, where the duration T_{sf} per subframe is 1ms. Each subframe is divided into slots and the number of slots in a subframe depends on a subcarrier spacing. Each slot includes 14 or 12 OFDM symbols based on a cyclic prefix (CP). In a normal CP, each slot includes 14 OFDM symbols and, in an extended CP, each slot includes 12 OFDM symbols. The numerology is based on exponentially scalable subcarrier spacing βf = 2^{u}*15 kHz.

Table 1 shows the number of OFDM symbols per slot N^{slot}_{symb}, the number of slots per frame N^{frame,u}ₛₗₒₜ, and the number of slots per subframe N^{subframe,u}ₛₗₒₜ for the normal CP, according to the subcarrier spacing βf = 2^{u}*15 kHz.

**[Table 1]**

| *u* | *N*^{slot}_{symb} | *N*^{frame,u}ₛₗₒₜ | *N*^{subframe,u}ₛₗₒₜ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

Table 2 shows the number of OFDM symbols per slot N^{slot}_{symb}, the number of slots per frame N^{frame,u}ₛₗₒₜ, and the number of slots per subframe N^{subframe,u}ₛₗₒₜ for the extended CP, according to the subcarrier spacing βf = 2^{u}*15 kHz.

**[Table 2]**

| *u* | *N*^{slot}_{symb} | *N*^{frame,u}ₛₗₒₜ | *N*^{subframe,u}ₛₗₒₜ |
|---|---|---|---|
| 2 | 12 | 40 | 4 |

A slot includes plural symbols (e.g., 14 or 12 symbols) in the time domain. For each numerology (e.g., subcarrier spacing) and carrier, a resource grid of *N*^{size,u}_{grid,x}**N*^{RB}_{sc} subcarriers and *N*^{subframe,u}_{symb} OFDM symbols is defined, starting at common resource block (CRB) *N*^{start,u}_{grid} indicated by higher-layer signaling (e.g., RRC signaling), where *N*^{size,u}_{grid,x} is the number of resource blocks (RBs) in the resource grid and the subscript x is DL for downlink and UL for uplink. *N*^{RB}_{sc} is the number of subcarriers per RB. In the 3GPP based wireless communication system, *N*^{RB}_{sc} is 12 generally. There is one resource grid for a given antenna port *p,* subcarrier spacing configuration *u,* and transmission direction (DL or UL). The carrier bandwidth *N*^{size,u}_{grid} for subcarrier spacing configuration *u* is given by the higher-layer parameter (e.g., RRC parameter). Each element in the resource grid for the antenna port *p* and the subcarrier spacing configuration *u* is referred to as a resource element (RE) and one complex symbol may be mapped to each RE. Each RE in the resource grid is uniquely identified by an index *k* in the frequency domain and an index *l* representing a symbol location relative to a reference point in the time domain. In the 3GPP based wireless communication system, an RB is defined by 12 consecutive subcarriers in the frequency domain. In the 3GPP NR system, RBs are classified into CRBs and physical resource blocks (PRBs). CRBs are numbered from 0 and upwards in the frequency domain for subcarrier spacing configuration *u.* The center of subcarrier 0 of CRB 0 for subcarrier spacing configuration *u* coincides with 'point A' which serves as a common reference point for resource block grids. In the 3GPP NR system, PRBs are defined within a bandwidth part (BWP) and numbered from 0 to *N*^{size}_{BWP,i}-1, where i is the number of the bandwidth part. The relation between the physical resource block n_{PRB} in the bandwidth part i and the common resource block n_{CRB} is as follows: n_{PRB} = n_{CRB} + *N*^{size}_{BWP,i}, where *N*^{size}_{BWP,i} is the common resource block where bandwidth part starts relative to CRB 0. The BWP includes a plurality of consecutive RBs. A carrier may include a maximum of N (e.g., 5) BWPs. A UE may be configured with one or more BWPs on a given component carrier. Only one BWP among BWPs configured to the UE can active at a time. The active BWP defines the UE's operating bandwidth within the cell's operating bandwidth.

The NR frequency band may be defined as two types of frequency range, i.e., FR1 and FR2. The numerical value of the frequency range may be changed. For example, the frequency ranges of the two types (FR1 and FR2) may be as shown in Table 3 below. For ease of explanation, in the frequency ranges used in the NR system, FR1 may mean "sub 6 GHz range", FR2 may mean "above 6 GHz range," and may be referred to as millimeter wave (mmW).

**[Table 3]**

| Frequency Range designation | Corresponding frequency range | Subcarrier Spacing |
|---|---|---|
| FR1 | 450MHz - 6000MHz | 15, 30, 60kHz |
| FR2 | 24250MHz - 52600MHz | 60, 120, 240kHz |

As mentioned above, the numerical value of the frequency range of the NR system may be changed. For example, FR1 may include a frequency band of 410MHz to 7125MHz as shown in Table 4 below. That is, FR1 may include a frequency band of 6GHz (or 5850, 5900, 5925 MHz, etc.) or more. For example, a frequency band of 6 GHz (or 5850, 5900, 5925 MHz, etc.) or more included in FR1 may include an unlicensed band. Unlicensed bands may be used for a variety of purposes, for example for communication for vehicles (e.g., autonomous driving).

**[Table 4]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

In the present disclosure, the term "cell" may refer to a geographic area to which one or more nodes provide a communication system, or refer to radio resources. A "cell" as a geographic area may be understood as coverage within which a node can provide service using a carrier and a "cell" as radio resources (e.g., time-frequency resources) is associated with bandwidth which is a frequency range configured by the carrier. The "cell" associated with the radio resources is defined by a combination of downlink resources and uplink resources, for example, a combination of a DL component carrier (CC) and a UL CC. The cell may be configured by downlink resources only, or may be configured by downlink resources and uplink resources. Since DL coverage, which is a range within which the node is capable of transmitting a valid signal, and UL coverage, which is a range within which the node is capable of receiving the valid signal from the UE, depends upon a carrier carrying the signal, the coverage of the node may be associated with coverage of the "cell" of radio resources used by the node. Accordingly, the term "cell" may be used to represent service coverage of the node sometimes, radio resources at other times, or a range that signals using the radio resources can reach with valid strength at other times.In CA, two or more CCs are aggregated. A UE may simultaneously receive or transmit on one or multiple CCs depending on its capabilities. CA is supported for both contiguous and non-contiguous CCs. When CA is configured, the UE only has one RRC connection with the network. At RRC connection establishment/re-establishment/handover, one serving cell provides the NAS mobility information, and at RRC connection re-establishment/handover, one serving cell provides the security input. This cell is referred to as the primary cell (PCell). The PCell is a cell, operating on the primary frequency, in which the UE either performs the initial connection establishment procedure or initiates the connection re-establishment procedure. Depending on UE capabilities, secondary cells (SCells) can be configured to form together with the PCell a set of serving cells. An SCell is a cell providing additional radio resources on top of special cell (SpCell). The configured set of serving cells for a UE therefore always consists of one PCell and one or more SCells. For dual connectivity (DC) operation, the term SpCell refers to the PCell of the master cell group (MCG) or the primary SCell (PSCell) of the secondary cell group (SCG). An SpCell supports PUCCH transmission and contention-based random access, and is always activated. The MCG is a group of serving cells associated with a master node, comprised of the SpCell (PCell) and optionally one or more SCells. The SCG is the subset of serving cells associated with a secondary node, comprised of the PSCell and zero or more SCells, for a UE configured with DC. For a UE in RRC_CONNECTED not configured with CA/DC, there is only one serving cell comprised of the PCell. For a UE in RRC_CONNECTED configured with CA/DC, the term "serving cells" is used to denote the set of cells comprised of the SpCell(s) and all SCells. In DC, two MAC entities are configured in a UE: one for the MCG and one for the SCG.

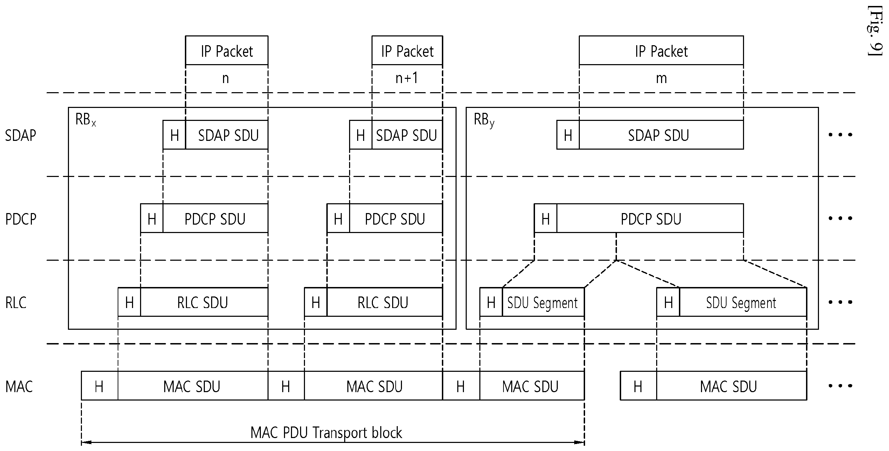

FIG. 9 shows a data flow example in the 3GPP NR system to which implementations of the present disclosure is applied.

Referring to FIG. 9, "RB" denotes a radio bearer, and "H" denotes a header. Radio bearers are categorized into two groups: DRBs for user plane data and SRBs for control plane data. The MAC PDU is transmitted/received using radio resources through the PHY layer to/from an external device. The MAC PDU arrives to the PHY layer in the form of a transport block.

In the PHY layer, the uplink transport channels UL-SCH and RACH are mapped to their physical channels physical uplink shared channel (PUSCH) and physical random access channel (PRACH), respectively, and the downlink transport channels DL-SCH, BCH and PCH are mapped to physical downlink shared channel (PDSCH), physical broadcast channel (PBCH) and PDSCH, respectively. In the PHY layer, uplink control information (UCI) is mapped to physical uplink control channel (PUCCH), and downlink control information (DCI) is mapped to physical downlink control channel (PDCCH). A MAC PDU related to UL-SCH is transmitted by a UE via a PUSCH based on an UL grant, and a MAC PDU related to DL-SCH is transmitted by a BS via a PDSCH based on a DL assignment.

Hereinafter, contents regarding a bandwidth part (BWP) is described.

BWP may be a contiguous set of physical resource blocks (PRBs), selected from a contiguous subset of the common resource blocks (CRBs) for a given numerology u on a given carrier.

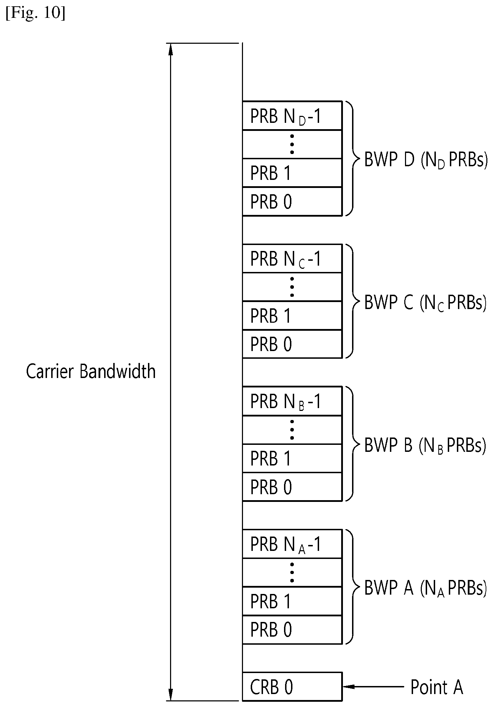

FIG. 10 shows an example of a BWP configuration to which technical features of the present disclosure is applied.

Referring to FIG. 10, 4 BWPs (i.e., BWP A, BWP B, BWP C and BWP D) are configured in a carrier bandwidth. The carrier bandwidth (or, carrier band) may comprise CRBs numbered from CRB0. CRB0 may correspond to or may be determined based on point A. Point A may indicate a common reference point for resource block grids and may be obtained from higher layer parameters.

The BWP A may comprise N_{A} PRBs numbered from PRBO to PRB N_{A}-1. The PRBO in the BWP A may have the number of offset PRBs/CRBs with respect to the CRBO, which may or may not be configured from a network.

The BWP B may comprise N_{B} PRBs numbered from PRBO to PRB N_{B}-1. The PRBO in the BWP B may have the number of offset PRBs/CRBs with respect to the CRBO, which may or may not configured from a network.

The BWP C may comprise N_{C} PRBs numbered from PRBO to PRB N_{C}-1. The PRBO in the BWP C may have the number of offset PRBs/CRBs with respect to the CRBO, which may or may not configured from a network.

The BWP D may comprise N_{D} PRBs numbered from PRBO to PRB N_{D}-1. The PRBO in the BWP D may have the number of offset PRBs/CRBs with respect to the CRBO, which may or may not configured from a network.

There may be various types of BWPs, such as initial BWP, first active BWP, default BWPs, and/or regular BWPs.

Initial BWP may be used for initial access (e.g., DL synchronization procedure, random access procedure) before RRC connection is established.

First active BWP may be a BWP to be active right after the initial attach is completed.

Default BWP may be a BWP to which UE and/or network automatically switches when there is no activity in current BWP while BWP inactivity timer is running. The BWP inactivity timer may indicate a duration after which the UE falls back to the default BWP.

In downlink, a UE can be configured with up to four carrier BWPs. The bandwidth of each BWP should be equal or greater than synchronization signal (SS) Block bandwidth (BW), but each BW may or may not contain SS Block. Only one carrier BWP can be active at a given time. The UE may not be expected to receive PDSCH, PDCCH, CSI-RS, and/or TRS outside an active bandwidth part. Each DL BWP may include at least one CORESET with UE Specific Search Space (USS). In primary carrier, at least one of the configured DL BWPs may include one CORESET with common search space (CSS).

In uplink, a UE can be configured with up to four carrier bandwidth parts. Only one carrier bandwidth part can be active at a given time. If a UE is configured with a supplementary uplink, the UE can in addition be configured with up to four carrier bandwidth parts in the supplementary uplink, and/or only one carrier bandwidth part can be active at a given time. The UE shall not transmit PUSCH or PUCCH outside an active bandwidth part.

In an initial access procedure, the initial BWP may be an active BWP. The initial BWP may be configured via RRC signalling.

Right after the initial attach is completed, the first active BWP may be an active BWP. The first active BWP may be configured via RRC signalling.

A specific BWP can be activated by BWP indicator in DCI. When a UE receives the DCI including the BWP indicator while the UE is on the first active BWP or other active BWP, the active BWP may be switched to the specific BWP indicated by the BWP indicator.

If a BWP inactivity timer expires, the default BWP may be an active BWP.

Further, in the disclosure, a dormant BWP may be defined. The dormant BWP is one of downlink BWPs configured by the network via dedicated RRC signalling. In the dormant BWP, the UE may stop monitoring PDCCH on/for the SCell, but continue performing CSI measurements, automatic gain control (AGC) and/or beam management, if configured. That is, in the dormant BWP, no uplink or downlink grant is allowed, but periodic CSI reporting can continue. For each serving cell other than the SpCell or PUCCH SCell, the network may configure one BWP as a dormant BWP.

A UE may receive a cell group configuration from a network which configures one or more cell groups (e.g., MCG and/or SCG). The cell group configuration may comprise a dormant BWP configuration for a non-PUCCH SCell.

The dormant BWP configuration may comprise one or more of the following parameters:
- *dormancyGroupWithinActiveTime*: contains the ID of an SCell group for Dormancy within active time, to which this SCell belongs.
- *dormancyGroupOutsideActiveTime*: contains the ID of an SCell group for Dormancy outside active time, to which this SCell belongs.
- *dormantBWP-Id*: contains the ID of the downlink bandwidth part to be used as dormant BWP. The dormant BWP may be different from the default DL BWP. If *dormantBWP-Id* is configured, at least one of the *withinActiveTimeConfig* and *outsideActiveTimeConfig* should be configured.
- *firstOutsideActiveTimeBWP-Id*: contains the ID of the downlink bandwidth part to be activated when receiving a DCI indication for SCell dormancy outside active time.
- *firstWithinActiveTimeBWP-Id*: contains the ID of the downlink bandwidth part to be activated when receiving a DCI indication for SCell dormancy within active time.
- *outsideActiveTimeConfig*: contains the configuration to be used for SCell dormancy outside active time. The *outsideActiveTimeConfig* can only be present when the cell group the SCell belongs to is configured with *dcp-Config.*
- *withinActiveTimeConfig*: contains the configuration to be used for SCell dormancy within active time.

Hereinafter, a dual connectivity (DC) is described.

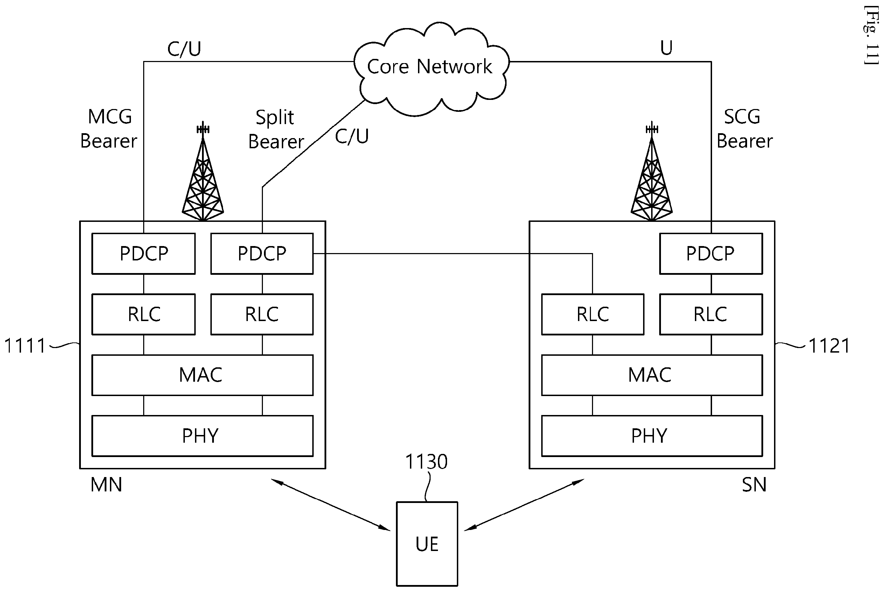

FIG. 11 shows an example of a DC architecture to which technical features of the present disclosure can be applied.

Referring to FIG. 11, MN 1111, SN 1121, and a UE 1130 communicating with both the MN 1111 and the SN 1121 are illustrated. As illustrated in FIG. 11, DC refers to a scheme in which a UE (e.g., UE 1130) utilizes radio resources provided by at least two RAN nodes comprising a MN (e.g., MN 1111) and one or more SNs (e.g., SN 1121). In other words, DC refers to a scheme in which a UE is connected to both the MN and the one or more SNs, and communicates with both the MN and the one or more SNs. Since the MN and the SN may be in different sites, a backhaul between the MN and the SN may be construed as non-ideal backhaul (e.g., relatively large delay between nodes).

MN (e.g., MN 1111) refers to a main RAN node providing services to a UE in DC situation. SN (e.g., SN 1121) refers to an additional RAN node providing services to the UE with the MN in the DC situation. If one RAN node provides services to a UE, the RAN node may be a MN. SN can exist if MN exists.

For example, the MN may be associated with macro cell whose coverage is relatively larger than that of a small cell. However, the MN does not have to be associated with macro cell - that is, the MN may be associated with a small cell. Throughout the disclosure, a RAN node that is associated with a macro cell may be referred to as 'macro cell node'. MN may comprise macro cell node.

For example, the SN may be associated with small cell (e.g., micro cell, pico cell, femto cell) whose coverage is relatively smaller than that of a macro cell. However, the SN does not have to be associated with small cell - that is, the SN may be associated with a macro cell. Throughout the disclosure, a RAN node that is associated with a small cell may be referred to as 'small cell node'. SN may comprise small cell node.

The MN may be associated with a master cell group (MCG). MCG may refer to a group of serving cells associated with the MN, and may comprise a primary cell (PCell) and optionally one or more secondary cells (SCells). User plane data and/or control plane data may be transported from a core network to the MN through a MCG bearer. MCG bearer refers to a bearer whose radio protocols are located in the MN to use MN resources. As shown in FIG. 11, the radio protocols of the MCG bearer may comprise PDCP, RLC, MAC and/or PHY.

The SN may be associated with a secondary cell group (SCG). SCG may refer to a group of serving cells associated with the SN, and may comprise a primary secondary cell (PSCell) and optionally one or more SCells. User plane data may be transported from a core network to the SN through a SCG bearer. SCG bearer refers to a bearer whose radio protocols are located in the SN to use SN resources. As shown in FIG. 11, the radio protocols of the SCG bearer may comprise PDCP, RLC, MAC and PHY.

User plane data and/or control plane data may be transported from a core network to the MN and split up/duplicated in the MN, and at least part of the split/duplicated data may be forwarded to the SN through a split bearer. Split bearer refers to a bearer whose radio protocols are located in both the MN and the SN to use both MN resources and SN resources. As shown in FIG. 11, the radio protocols of the split bearer located in the MN may comprise PDCP, RLC, MAC and PHY. The radio protocols of the split bearer located in the SN may comprise RLC, MAC and PHY.

According to various embodiments, PDCP anchor/PDCP anchor point/PDCP anchor node refers to a RAN node comprising a PDCP entity which splits up and/or duplicates data and forwards at least part of the split/duplicated data over X2/Xn interface to another RAN node. In the example of FIG. 11, PDCP anchor node may be MN.

According to various embodiments, the MN for the UE may be changed. This may be referred to as handover, or a MN handover.

According to various embodiments, a SN may newly start providing radio resources to the UE, establishing a connection with the UE, and/or communicating with the UE (i.e., SN for the UE may be newly added). This may be referred to as a SN addition.

According to various embodiments, a SN for the UE may be changed while the MN for the UE is maintained. This may be referred to as a SN change.

According to various embodiments, DC may comprise E-UTRAN NR - DC (EN-DC), and/or multi-radio access technology (RAT) - DC (MR-DC). EN-DC refers to a DC situation in which a UE utilizes radio resources provided by E-UTRAN node and NR RAN node. MR-DC refers to a DC situation in which a UE utilizes radio resources provided by RAN nodes with different RATs.

In some implementations, a UE may consider a cell group as being in a deactivated state/dormant state for power saving. For example, the UE may consider the cell group as being in the deactivated/dormant state if the UE receives a command via MAC CE or DCI from a network. For another example, the UE may consider the cell group as being in the deactivated/dormant state if a pre-determined condition is met (e.g., there is no traffic activity on UL and/or DL on the cell group for a pre-determined period). The UE may consider the cell group as being in an activated state if the UE receives a command via MAC CE or DCI from a network, a deactivation/dormant period on the cell group expires or a random access (RA) is triggered on the cell group during the deactivated/dormant state. The cell group may comprise MCG and/or SCG.

The activated state may refer to a state in which the UE monitors downlink control channel (PDCCH) for downlink scheduling, performs CSI measurements, performs CSI reporting, if needed, and/or has opportunities to request uplink scheduling, if needed.

The deactivated state may refer to a state in which the UE does not monitor downlink control channel (PDCCH) for downlink scheduling, does not perform CSI measurements and/or does not perform CSI reporting.

The dormant state may refer to a state in which the UE does not monitor downlink control channel (PDCCH) for downlink scheduling, but perform CSI measurements. The UE may not be required to perform CSI reporting in a dormant state to save power consumption. Dormant state may be classified as a sub-state of the activated state.

For a UE configured with MCG and SCG, the UE may deactivate SCG (i.e., consider the SCG as being in a deactivated/dormant state) for power saving. While the SCG is deactivated, the UE may need to keep radio link monitoring to check if the SCG is usable. If a failure (e.g., SCG failure/beam failure) is detected, the UE may need to report the failure to network via MCG or to perform recovery procedure.

Hereinafter, timing alignment/time alignment/timing advance/time advance (TA) is described.

RRC may configure TA timer (TAT) per a timing advance group (TAG) for the maintenance of UL time alignment. The TA timer may control how long the MAC entity considers the serving cells belonging to the associated TAG to be uplink time aligned.

The MAC entity shall, when a timing advance command MAC CE is received, apply the timing advance command for the indicated TAG, and start or restart the TA timer associated with the indicated TAG.

When the TA timer expires, the MAC entity shall notify RRC to release PUCCH for one or more of all the serving cells if configured, and notify RRC to release SRS for one or more of all the serving cells if configured.

When the MAC entity stops uplink transmissions for an SCell due to the fact that the maximum uplink transmission timing difference between TAGs of the MAC entity or the maximum uplink transmission timing difference between TAGs of any MAC entity of the UE is exceeded, the MAC entity may consider the TA timer associated with the SCell as expired.

The MAC entity shall not perform any uplink transmissions on a serving cell except the random access preamble and/or MSGA transmission when the TA timer associated with the TAG to which the serving cell belongs is not running. Furthermore, when the TA timer associated with a primary TAG (PTAG) is not running, the MAC entity shall not perform any uplink transmissions on any serving cell except the random access preamble and/or MSGA transmission on the SpCell.

Hereinafter, beam selection in a random access (RA) procedure is described. UE may select a beam (e.g., SS/PBCH block and/or CSI-RS resource) in a 4-step RA procedure (i.e., *RA_TYPE* is set to *4-stepRA*) or a 2-step RA procedure (i.e., *RA_TYPE* is set to *2-stepRA).*

If the selected *RA_TYPE* is set to *4-stepRA,* the MAC entity shall:
1> if the Random Access procedure was initiated for SpCell beam failure recovery; and
1> if the *beamFailureRecoveryTimer* is either running or not configured; and
1> if the contention-free Random Access Resources for beam failure recovery request associated with any of the SSBs and/or CSI-RSs have been explicitly provided by RRC; and
1> if at least one of the SSBs with SS-RSRP above *rsrp-ThresholdSSB* amongst the SSBs in *candidateBeamRSList* or the CSI-RSs with CSI-RSRP above *rsrp-ThresholdCSI-RS* amongst the CSI-RSs in *candidateBeamRSList* is available:
2> select an SSB with SS-RSRP above *rsrp-ThresholdSSB* amongst the SSBs in *candidateBeamRSList* or a CSI-RS with CSI-RSRP above *rsrp-ThresholdCSI-RS* amongst the CSI-RSs in *candidateBeamRSList;*
2> if CSI-RS is selected, and there is no *ra-PreambleIndex* associated with the selected CSI-RS:
3> set the *PREAMBLE_INDEX* to a *ra-PreambleIndex* corresponding to the SSB in *candidateBeamRSList* which is quasi-colocated with the selected CSI-RS.
2> else:
3> set the *PREAMBLE_INDEX* to a *ra-PreambleIndex* corresponding to the selected SSB or CSI-RS from the set of Random Access Preambles for beam failure recovery request.
1> else if the *ra-PreambleIndex* has been explicitly provided by PDCCH; and
1> if the *ra-PreambleIndex* is not 0b000000:
2> set the *PREAMBLE_INDEX* to the signalled *ra-PreambleIndex;*
2> select the SSB signalled by PDCCH.
1> else if the contention-free Random Access Resources associated with SSBs have been explicitly provided in *rach-ConfigDedicated* and at least one SSB with SS-RSRP above *rsrp-ThresholdSSB* amongst the associated SSBs is available:
2> select an SSB with SS-RSRP above *rsrp-ThresholdSSB* amongst the associated SSBs;
2> set the *PREAMBLE_INDEX* to a *ra-PreambleIndex* corresponding to the selected SSB.
1> else if the contention-free Random Access Resources associated with CSI-RSs have been explicitly provided in *rach-ConfigDedicated* and at least one CSI-RS with CSI-RSRP above *rsrp-ThresholdCSI-RS* amongst the associated CSI-RSs is available:
2> select a CSI-RS with CSI-RSRP above *rsrp-ThresholdCSI-RS* amongst the associated CSI-RSs;
2> set the *PREAMBLE_INDEX* to a *ra-PreambleIndex* corresponding to the selected CSI-RS.
1> else if the Random Access procedure was initiated for SI request; and
1> if the Random Access Resources for SI request have been explicitly provided by RRC:
2> if at least one of the SSBs with SS-RSRP above *rsrp-ThresholdSSB* is available:
3> select an SSB with SS-RSRP above *rsrp-ThresholdSSB.*
2> else:
3> select any SSB.
2> select a Random Access Preamble corresponding to the selected SSB, from the Random Access Preamble(s) determined according to *ra-PreambleStartIndex;*
2> set the *PREAMBLE_INDEX* to selected Random Access Preamble.
1> else (i.e. for the contention-based Random Access preamble selection):
2> if at least one of the SSBs with SS-RSRP above *rsrp-ThresholdSSB* is available:
3> select an SSB with SS-RSRP above *rsrp-ThresholdSSB.*
2> else:
3> select any SSB.
2> if the *RA_TYPE* is switched from *2-stepRA* to *4-stepRA:*
3> if a Random Access Preambles group was selected during the current Random Access procedure:
4> select the same group of Random Access Preambles as was selected for the 2-step RA type.
3> else:
4> if Random Access Preambles group B is configured; and
4> if the transport block size of the MSGA payload configured in the *rach-ConfigDedicated* corresponds to the transport block size of the MSGA payload associated with Random Access Preambles group B:
5> select the Random Access Preambles group B.
4> else:
5> select the Random Access Preambles group A.
2> else if Msg3 buffer is empty:
3> if Random Access Preambles group B is configured:
4> if the potential Msg3 size (UL data available for transmission plus MAC subheader(s) and, where required, MAC CEs) is greater than *ra-Msg3SizeGroupA* and the pathloss is less than *PCMAX* (of the Serving Cell performing the Random Access Procedure) *- preambleReceivedTargetPower - msg3-DeltaPreamble - messagePowerOffsetGroupB;* or
4> if the Random Access procedure was initiated for the CCCH logical channel and the CCCH SDU size plus MAC subheader is greater than *ra-Msg3SizeGroupA:*
5> select the Random Access Preambles group B.
4> else:
5> select the Random Access Preambles group A.
3> else:
4> select the Random Access Preambles group A.
2> else (i.e. Msg3 is being retransmitted):
3> select the same group of Random Access Preambles as was used for the Random Access Preamble transmission attempt corresponding to the first transmission of Msg3.
2> select a Random Access Preamble randomly with equal probability from the Random Access Preambles associated with the selected SSB and the selected Random Access Preambles group;
2> set the *PREAMBLE_INDEX* to the selected Random Access Preamble.
1> if the Random Access procedure was initiated for SI request (as specified in TS 38.331 [5]); and
1> if *ra-AssociationPeriodIndex* and *si-RequestPeriod* are configured:
2> determine the next available PRACH occasion from the PRACH occasions corresponding to the selected SSB in the association period given by *ra-AssociationPeriodIndex* in the *si-RequestPeriod* permitted by the restrictions given by the *ra-ssb-OccasionMaskIndex* if configured (the MAC entity shall select a PRACH occasion randomly with equal probability amongst the consecutive PRACH occasions corresponding to the selected SSB).
1> else if an SSB is selected above:
2> determine the next available PRACH occasion from the PRACH occasions corresponding to the selected SSB permitted by the restrictions given by the *ra-ssb-OccasionMaskIndex* if configured or indicated by PDCCH (the MAC entity shall select a PRACH occasion randomly with equal probability amongst the consecutive PRACH occasions, corresponding to the selected SSB; the MAC entity may take into account the possible occurrence of measurement gaps when determining the next available PRACH occasion corresponding to the selected SSB).
1> else if a CSI-RS is selected above:
2> if there is no contention-free Random Access Resource associated with the selected CSI-RS:
3> determine the next available PRACH occasion from the PRACH occasions, permitted by the restrictions given by the *ra-ssb-OccasionMaskIndex* if configured, corresponding to the SSB in *candidateBeamRSList* which is quasi-colocated with the selected CSI-RS (the MAC entity shall select a PRACH occasion randomly with equal probability amongst the consecutive PRACH occasions, corresponding to the SSB which is quasi-colocated with the selected CSI-RS; the MAC entity may take into account the possible occurrence of measurement gaps when determining the next available PRACH occasion corresponding to the SSB which is quasi-colocated with the selected CSI-RS).
2> else:
3> determine the next available PRACH occasion from the PRACH occasions in *ra-OccasionList* corresponding to the selected CSI-RS (the MAC entity shall select a PRACH occasion randomly with equal probability amongst the PRACH occasions occurring simultaneously but on different subcarriers, corresponding to the selected CSI-RS; the MAC entity may take into account the possible occurrence of measurement gaps when determining the next available PRACH occasion corresponding to the selected CSI-RS).
1> perform the Random Access Preamble transmission procedure.
When the UE determines if there is an SSB with SS-RSRP above *rsrp-ThresholdSSB* or a CSI-RS with CSI-RSRP above *rsrp-ThresholdCSI-RS,* the UE uses the latest unfiltered L1-RSRP measurement.
If the selected *RA_TYPE* is set to *2-stepRA,* the MAC entity shall:
1> if the contention-free 2-step RA type Resources associated with SSBs have been explicitly provided in *rach-ConfigDedicated* and at least one SSB with SS-RSRP above *msgA-RSRP-ThresholdSSB* amongst the associated SSBs is available:
2> select an SSB with SS-RSRP above *msgA-RSRP-ThresholdSSB* amongst the associated SSBs;
2> set the *PREAMBLE_INDEX* to a *ra-PreambleIndex* corresponding to the selected SSB.
1> else (i.e. for the contention-based Random Access Preamble selection):
2> if at least one of the SSBs with SS-RSRP above *msgA-RSRP-ThresholdSSB* is available:
3> select an SSB with SS-RSRP above *msgA-RSRP-ThresholdSSB.*
2> else:
3> select any SSB.
2> if contention-free Random Access Resources for 2-step RA type have not been configured and if Random Access Preambles group has not yet been selected during the current Random Access procedure:
3> if Random Access Preambles group B for 2-step RA type is configured:
4> if the potential MSGA payload size (UL data available for transmission plus MAC subheader and, where required, MAC CEs) is greater than the *ra-MsgA-SizeGroupA* and the pathloss is less than *PCMAX* (of the Serving Cell performing the Random Access Procedure) *- msgA-PreambleReceivedTargetPower* - *msgA-DeltaPreamble - messagePowerOffsetGroupB;* or
4> if the Random Access procedure was initiated for the CCCH logical channel and the CCCH SDU size plus MAC subheader is greater than *ra-MsgA-SizeGroupA*:
5> select the Random Access Preambles group B.
4> else:
5> select the Random Access Preambles group A.
3> else:
4> select the Random Access Preambles group A.
2> else if contention-free Random Access Resources for 2-step RA type have been configured and if Random Access Preambles group has not yet been selected during the current Random Access procedure:
3> if Random Access Preambles group B for 2-step RA type is configured; and
3> if the transport block size of the MSGA payload configured in the *rach-ConfigDedicated* corresponds to the transport block size of the MSGA payload associated with Random Access Preambles group B:
4> select the Random Access Preambles group B.
3> else:
4> select the Random Access Preambles group A.
2> else (i.e. Random Access preambles group has been selected during the current Random Access procedure):
3> select the same group of Random Access Preambles as was used for the Random Access Preamble transmission attempt corresponding to the earlier transmission of MSGA.
2> select a Random Access Preamble randomly with equal probability from the 2-step RA type Random Access Preambles associated with the selected SSB and the selected Random Access Preambles group;
2> set the *PREAMBLE_INDEX* to the selected Random Access Preamble.
1> determine the next available PRACH occasion from the PRACH occasions corresponding to the selected SSB permitted by the restrictions given by the *msgA-SSB-SharedRO-MaskIndex* if configured and *ra-ssb-OccasionMaskIndex* if configured (the MAC entity shall select a PRACH occasion randomly with equal probability among the consecutive PRACH occasions allocated for 2-step RA type, corresponding to the selected SSB; the MAC entity may take into account the possible occurrence of measurement gaps when determining the next available PRACH occasion corresponding to the selected SSB);
1> if the Random Access Preamble was not selected by the MAC entity among the contention-based Random Access Preamble(s):
2> select a PUSCH occasion from the PUSCH occasions configured in *msgA-CFRA-PUSCH* corresponding to the PRACH slot of the selected PRACH occasion, according to *msgA-PUSCH-resource-Index* corresponding to the selected SSB;
2> determine the UL grant and the associated HARQ information for the MSGA payload in the selected PUSCH occasion;
2> deliver the UL grant and the associated HARQ information to the HARQ entity.
1> else:
2> select a PUSCH occasion corresponding to the selected preamble and PRACH occasion;
2> determine the UL grant for the MSGA payload according to the PUSCH configuration associated with the selected Random Access Preambles group and determine the associated HARQ information;
2> if the selected preamble and PRACH occasion is mapped to a valid PUSCH occasion:
3> deliver the UL grant and the associated HARQ information to the HARQ entity.
1> perform the MSGA transmission procedure.

To determine if there is an SSB with *SS-RSRP* above *msgA-RSRP-ThresholdSSB,* the UE uses the latest unfiltered *L1-RSRP* measurement.

Meanwhile, to reduce an activation time, it is beneficial to skip RACH, upon activation of deactivated SCG so that the UE can immediately utilize the PSCell for transmission and reception. However, there may be some issues regarding RACH skipping upon activation of SCG.

For example, the first issue is about TA validity. Upon deactivation of SCG, if the UE does not stop TAT, TA can be considered valid until TAT expires. If TAT expires, the UE may perform RACH merely to update TA.

For another example, the second issue is about beam quality. In multiple-beam operation scenarios, a quality of the selected beam on deactivated PSCell likely gets worse. If the beam quality is not good enough upon reception of indication for SCG activation, the RACH may need to be performed for beam selection.

Given at least the first and second issues, the RACH procedure can be skipped upon SCG activation if TA is valid and beam quality is good enough.

In addition, it is also an important issue to introduce the lower-layer signalling (e.g., PHY-layer signalling/PDCCH signalling/DCI/MAC-layer signalling/MAC CE signalling) for SCG activation. The lower layer signalling should be supported for SCG activation to achieve a shorter activation time. This is because, as long as the network chooses to deactivate SCG, rather than releasing SCG, it is likely that a large volume of traffic may arrive at any time, and SCG then needs to be activated on time. Also, as much as the network chooses to deactivate SCG, rather than releasing SCG, the gain from time reduction for SCG activation increases because the time for signalling RRC messages is saved whenever lower layer signalling is used.

However, to support the lower-layer signalling for SCG activation, signalling via MCG should be supported. To support the lower-layer signalling via MCG, MCG DCI or MCG MAC CE can be candidate options to activate SCG.

Therefore, a way to (re)activate SCG via lower-layer signalling from inter-cell group may be needed when RACH procedure can be skipped in the procedure of SCG activation.

In the present disclosure, while a first cell group (e.g., SCG) is deactivated, when a second cell group (e.g., SCG) sends a signalling to the UE to activate the first cell group, the UE may autonomously switch active BWP from a dormant BWP where the UE stops monitoring PDCCH on/for the serving cell (e.g., serving SCell) to one of other BWPs, i.e., non-dormant BWP, where PDCCH can be monitored if the UE doesn't need to perform a random access procedure on the first cell group based on one or more skip conditions.

For example, a signalling to the UE from the second cell group to activate the first cell group may be sent via RRC message. The network may indicate to activate the first cell group using RRC message of MCG, e.g., *RRCReconfiguration* message. To update SCG configuration, another RRC message of SCG can be embedded in the RRC message of MCG.

For another example, a signalling to the UE from the second cell group to activate the first cell group may be sent via MAC CE. The network may indicate to activate the first cell group using MAC CE information of MCG. To reduce an RRC signalling for a cell group activation, e.g., SCG activation, MAC CE can be used.

For another example, a signalling to the UE from the second cell group to activate the first cell group may be sent via PHY short message. Short messages can be transmitted on PDCCH using P-RNTI with or without associated paging message using short message field in DCI format 1_0. Table 5 defines short messages, where bit 1 is the most significant bit.

**[Table 5]**

| BBit | Short Message |
|---|---|
| 1 | *- systemInfoModification* |
| | If set to 1: indication of a BCCH modification other than SIB6, SIB7 and SIB8. |
| 2 | *- etwsAndCmasIndication* |
| | If set to 1: indication of an ETWS primary notification and/or an ETWS secondary notification and/or a CMAS notification. |
| 3 | *- stopPagingMonitoring* |
| | This bit can be used for only operation with shared spectrum channel access and if *nrofPDCCH-MonitoringOccasionPerSSB-InPO* is present. |
| | If set to 1: indication that the UE may stop monitoring PDCCH occasion(s) for paging in this Paging Occasion. |
| 4 - 8 | Reserved |

The network may indicate to activate the first cell group using the short message, e.g., DCI transmitted on PDCCH. To reduce an RRC signalling for a cell group activation, e.g., SCG activation, the short message can be used. For example, at least one of the bits 4-8 in the short message as defined in table 5 may be used to indicate to activate the first cell group. The UE may check if the UE doesn't need to perform a random access procedure on the first cell group based on one or more skip conditions including TAT validity and/or beam measurement results.

Regarding the TAT validity, the UE may check if TA timer for the first cell group is still running. If the TA timer expires, the UE should perform a random access procedure to activate the first cell group. Otherwise, i.e., if the TA timer is running, the UE can skip the random access procedure to activate the first cell group. The TA timer and related TA configuration may be provided when the network configures carrier aggregation (CA) and/or DC for the UE.

Regarding the beam measurement results, if the beam quality is not good enough upon reception of indication for activating the first cell group, the UE should perform a random access procedure to activate the first cell group. Otherwise, i.e., if the beam quality is good enough upon reception of indication for activating the first cell group, the UE can skip the random access procedure to activate the first cell group.

The above two skip conditions may be optionally provided, and the two skip conditions may be fully met if the network provides the two skip conditions at once.

When switching BWP autonomously, the UE may select a BWP which doesn't include RACH configuration, i.e., doesn't have a resource configuration for the random access procedure.

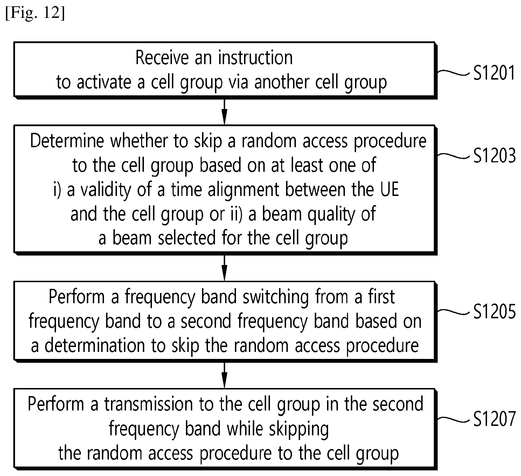

FIG. 12 shows an example of a method performed by a UE according to an embodiment of the present disclosure. The method may also be performed by a wireless device.

Referring to FIG. 12, in step S1201, the UE may receive an instruction to activate a cell group (e.g., SCG) via another cell group (e.g., MCG).

In step S1203, the UE may determine whether to skip a random access procedure to the cell group based on at least one of i) a validity of a time alignment between the UE and the cell group or ii) a beam quality of a beam selected for the cell group.

In step S1205, the UE may perform a frequency band switching from a first frequency band to a second frequency band based on a determination to skip the random access procedure. The UE may stop monitoring a control channel on one or more cells in the cell group in the first frequency band. The UE may monitor a control channel on the one or more cells in the cell group in the second frequency band.

In step S1207, the UE may perform a transmission to the cell group in the second frequency band while skipping the random access procedure to the cell group.

According to various embodiments, the instruction may be configured or signalled by the another cell group to the UE via at least one of downlink control information (DCI), a media access control (MAC) control element (CE) or a radio resource control (RRC) message.

According to various embodiments, the UE may determine to skip the random access procedure to the cell group based on that the time alignment between the UE and the cell group is valid. The UE may determine to perform the random access procedure to the cell group based on that the time alignment between the UE and the cell group is invalid.

According to various embodiments, the time alignment between the UE and the cell group may be valid while a time alignment timer for the cell group is running. The time alignment between the UE and the cell group being valid may comprise an uplink timing of the UE being aligned with the cell group. The time alignment timer may be started or restarted upon the UE receiving information informing the uplink timing of the UE towards the cell group.

According to various embodiments, while performing the random access procedure, the UE may transmit, to the cell group, a random access preamble. The UE may receive, from the cell group, a random access response after transmitting the random access preamble. The random access response may comprise information informing an uplink timing of the UE towards the cell group.

According to various embodiments, the UE may determine to skip the random access procedure to the cell group based on that a beam quality of a beam selected for the cell group is higher than a threshold. The UE may determine to perform the random access procedure to the cell group based on that a beam quality of a beam selected for the cell group is lower than a threshold.

According to various embodiments, another beam with beam quality higher than the threshold may be selected for the cell group while the UE performs the random access procedure.

According to various embodiments, a random access configuration may be unavailable in the second frequency band. The random access configuration may comprise a resource configuration used to perform the random access procedure.

According to various embodiments, the frequency band switching may be performed autonomously by the UE.

According to various embodiments, the UE may be configured with a dual connectivity (DC) of a master cell group (MCG) and a secondary cell group (SCG). The MCG may comprise a primary cell (PCell) and optionally one or more secondary cells (SCells). The SCG may comprise a primary secondary cell (PSCell) and optionally one or more SCells. The cell group may comprise the SCG.

According to various embodiments, the UE may monitor a physical downlink control channel (PDCCH) on the PSCell while the SCG is activated. The UE may stop monitoring a PDCCH on the PSCell while the SCG is deactivated.

According to various embodiments, the first frequency band may comprise a dormant bandwidth part (BWP) in which the UE stops monitoring a physical downlink control channel (PDCCH) on the one or more cells in the cell group. The second frequency band may comprise a non-dormant BWP in which the UE monitors a PDCCH on the one or more cells in the cell group. The frequency band switching may comprise a BWP switching from the dormant BWP to the non-dormant BWP.

For example, the one or more cells may comprise PSCell, PUCCH SCell(s) and SCell(s) in the SCG.

The UE stopping monitoring a PDCCH on PSCell or PUCCH SCell(s) in the dormant BWP may correspond to the SCG being deactivated. The UE stopping monitoring a PDCCH on PSCell or PUCCH SCell(s) while the SCG is deactivated may correspond to the UE being in the dormant BWP.

The UE monitoring a PDCCH on PSCell or PUCCH SCell(s) in the non-dormant BWP may correspond to the SCG being activated. The UE monitoring a PDCCH on PSCell or PUCCH SCell(s) while the SCG is activated may correspond to the UE being in the non-dormant BWP.

For another example, the one or more cells may comprise SCell(s) in the SCG, but does not comprise PSCell and PUCCH SCell(s) in the SCG.

According to various embodiments, the UE may receive a configuration for a carrier aggregation (CA) and/or dual connectivity (DC). The configuration for CA and DC may comprise a configuration for a mastery cell group (MCG) and a configuration for a secondary cell group (SCG). The configuration for CA and DC may include time alignment information for each cell group (e.g., information informing an uplink timing of the UE towards each cell group, and/or information for a time alignment timer during which the uplink timing of the UE is aligned with each cell group). The configuration for CA and DC may configure a first BWP in which the UE stops PDCCH monitoring on one or more cells in the SCG. The UE may receive an indication to activate SCG via MCG. The UE may check whether the UE can skip random access procedure to synchronize with SCG based on validity of the time alignment information upon reception of the indication to activate SCG and/or a beam quality of a beam selected for the SCG. The UE may switch BWP autonomously from the first BWP to a second BWP in which the UE starts PDCCH monitoring on the one or more cells in the SCG if the UE skips the random access procedure to the SCG. The second BWP may not include a configuration for the random access procedure, e.g., PRACH occasion.

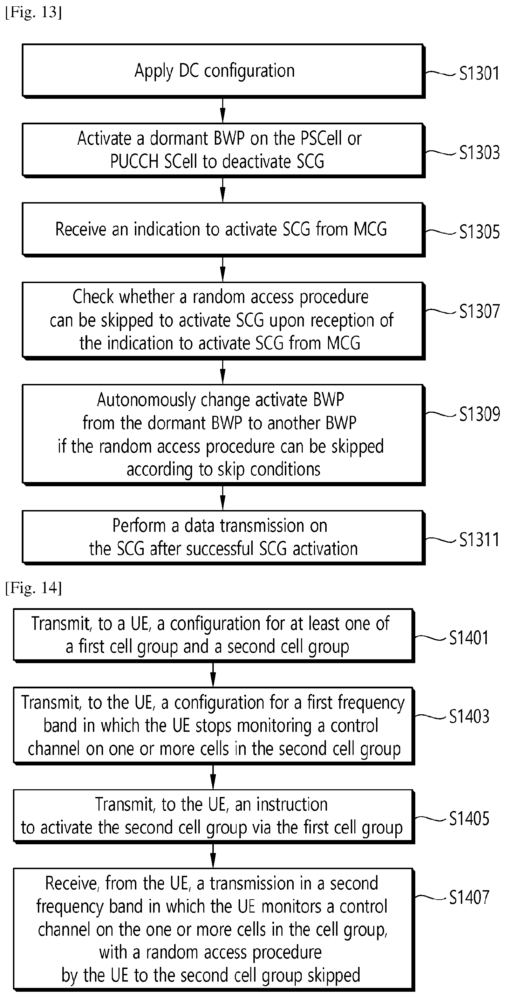

FIG. 13 shows an example of a method for skipping a random access procedure to an SCG upon an SCG activation according to an embodiment of the present disclosure. The method may be performed by a UE and/or a wireless device.

Referring to FIG. 13, in step S1301, the UE may apply a DC configuration. The UE may receive DC configuration via an RRC dedicated signalling. The UE may apply MCG and SCG configuration and may be synchronised with serving cells including PSCell and PUCCH SCells in the SCG. The network may provide skip conditions to skip random access procedure to SCG.

In step S1303, the UE may activate a dormant BWP on the PSCell or PUCCH SCell to deactivate SCG. That is, the UE may switch an active BWP to the dormant BWP on the PSCell or PUCCH SCell to deactivate SCG. The UE may receive a dormant BWP configuration via RRC dedicated signalling to activate a dormant BWP on/for the PSCell or PUCCH SCells. In the dormant BWP, there is no PDCCH for the UE to monitor for the corresponding cell. The dormant BWP may be at least one BWP among configured multiple BWPs (e.g., maximum of four BWPs). The dormant BWP may be activated by the BWP switching, which is controlled by the PDCCH indicating a downlink assignment or an uplink grant, by the *bwp-InactivityTimer,* by RRC signalling, or by the MAC entity itself upon initiation of a random access procedure. Upon activation of the dormant BWP, the UE does not need to monitor PDCCH for the corresponding cell and SCG is regarded as deactivated.

In step S1305, the UE may receive an indication to activate SCG from MCG. The UE may receive an indication to activate SCG via MCG e.g., RRC reconfiguration, MAC CE, or DCI of MCG. In the indication from MCG, the network may provide skip conditions to skip random access procedure on SCG if not provided.

The UE may also receive an additional indication to select a BWP which is not configured with RACH configuration when performing autonomous BWP switching.

In step S1307, the UE may check whether a random access procedure can be skipped to activate SCG upon reception of the indication to activate SCG from MCG. That is, the UE may check the skip conditions for skipping a random access procedure to activate SCG upon reception of the indication to activate SCG from MCG.

For example, the skip conditions may comprise a condition that the TA timer is running. The UE may check if TA timer for SCG is still running. If the TA timer expires, the UE should perform a random access procedure to activate SCG. Otherwise, i.e., if the TA timer is running, the UE can skip the random access procedure to activate SCG.

For example, the skip conditions may comprise a condition that a beam quality of a beam selected for the SCG is good enough. The UE may check if beam quality for PSCell is good enough. If the beam quality is not good enough upon reception of indication for SCG activation, the UE should perform a random access procedure to activate SCG. Otherwise, i.e., if the beam quality is good enough upon reception of indication for SCG activation, the UE can skip the random access procedure to activate SCG.

In step S1309, the UE may autonomously change active BWP from the dormant BWP to another BWP (e.g., non-dormant BWP) if the random access procedure can be skipped according to the skip condition(s).

The UE may autonomously switch active BWP from the dormant BWP to another BWP to activate SCG without performing the random access procedure towards the SCG. That is, the UE may deactivate the dormant BWP i.e., the BWP that is not configured with PDCCH and activate another BWP that is configured with PDCCH.

Another BWP i.e., to be switched from the dormant BWP, may be referred to as the new active bandwidth part.

The new active bandwidth part may be the initial bandwidth part. In this case, UE may change the active bandwidth part of the certain cell (e.g., PSCell/PUCCH SCell/ SCell) from the dormant BWP to the initial bandwidth part. The initial bandwidth part may be a bandwidth part used for initial access. The initial bandwidth part may be detected from system information. The initial bandwidth part may be referred to by BWP-Id = 0.

The new active bandwidth part may be the default bandwidth part. In this case, UE may change the active bandwidth part of the certain cell (e.g., PSCell/PUCCH SCell/ SCell) from the dormant BWP to the default bandwidth part. The default bandwidth part may be a bandwidth part to be used upon the expiry of the BWP inactivity timer. The UE may use the initial bandwidth part as the default bandwidth part.

The UE may select a bandwidth part among bandwidth parts configured with PDCCH, and change the active bandwidth part from the dormant BWP to the selected bandwidth part.

The UE may select a bandwidth part among bandwidth parts not configured with RACH or PRACH occasions, and change the active bandwidth part from the dormant BWP to the selected bandwidth part.

The network may predefine a bandwidth part having PDCCH. In this case, UE may change the active bandwidth part from the dormant BWP to the predefined bandwidth part.

If there is pre-configured or dedicated information to indicate which network resources can be used for indicating UE autonomous BWP switching, the UE may indicate to the network that the BWP is autonomously switched by the pre-configured or dedicated information.

In step S1311, the UE may perform data transmission on the SCG after successful SCG activation.

Upon successfully sending of the indication to indicate that the BWP is autonomously switched, the UE may regard the SCG as being activated.

FIG. 14 shows an example of a method performed by a network node according to an embodiment of the present disclosure. The network node may comprise a base station (BS).

Referring to FIG. 14, in step S1401, the network node may transit, to a UE, a configuration for at least one of a first cell group and a second cell group.

In step S1403, the network node may transmit, to the UE, a configuration for a first frequency band in which the UE stops monitoring a control channel on one or more cells in the second cell group.

In step S1405, the network node may transmit, to the UE, an instruction to activate the second cell group via the first cell group.

In step S1407, the network node may receive, from the UE, a transmission in a second frequency band in which the UE monitors a control channel on the one or more cells in the cell group, with a random access procedure by the UE to the second cell group skipped. Whether to skip the random access procedure to the second cell group may be determined based on at least one of i) a validity of a time alignment between the UE and the second cell group, or ii) a beam quality of a beam selected for the second cell groupwhether to skip the random access procedure to the second cell group is determined based on at least one of i) a validity of a time alignment between the UE and the second cell group, or ii) a beam quality of a beam selected for the second cell group. A frequency band switching may be performed from the first frequency band to the second frequency band based on a determination to skip the random access procedure.

Furthermore, the method in perspective of the wireless device described above in FIG. 12 may be performed by first wireless device 100 shown in FIG. 2, the wireless device 100 shown in FIG. 3, the first wireless device 100 shown in FIG. 4 and/or the UE 100 shown in FIG. 5.

More specifically, the wireless device comprises at least one transceiver, at least processor, and at least one computer memory operably connectable to the at least one processor and storing instructions that, based on being executed by the at least one processor, perform operations.

The operations may comprise receiving an instruction to activate a cell group via another cell group; after receiving the instruction, determining whether to skip a random access procedure to the cell group based on at least one of i) a validity of a time alignment between the UE and the cell group or ii) a beam quality of a beam selected for the cell group; performing a frequency band switching from a first frequency band to a second frequency band based on a determination to skip the random access procedure; and performing a transmission to the cell group in the second frequency band while skipping the random access procedure to the cell group. The UE may stop monitoring a control channel on one or more cells in the cell group in the first frequency band. The UE may monitor a control channel on the one or more cells in the cell group in the second frequency band.

Furthermore, the method in perspective of the wireless device described above in FIG. 12 may be performed by a software code 105 stored in the memory 104 included in the first wireless device 100 shown in FIG. 4.

More specifically, at least one computer readable medium (CRM) stores instructions that, based on being executed by at least one processor, perform operations comprising receiving an instruction to activate a cell group via another cell group; after receiving the instruction, determining whether to skip a random access procedure to the cell group based on at least one of i) a validity of a time alignment between the UE and the cell group or ii) a beam quality of a beam selected for the cell group; performing a frequency band switching from a first frequency band to a second frequency band based on a determination to skip the random access procedure; and performing a transmission to the cell group in the second frequency band while skipping the random access procedure to the cell group. The UE may stop monitoring a control channel on one or more cells in the cell group in the first frequency band. The UE may monitor a control channel on the one or more cells in the cell group in the second frequency band.

Furthermore, the method in perspective of the wireless device described above in FIG. 12 may be performed by control of the processor 102 included in the first wireless device 100 shown in FIG. 2, by control of the communication unit 110 and/or the control unit 120 included in the wireless device 100 shown in FIG. 3, by control of the processor 102 included in the first wireless device 100 shown in FIG. 4 and/or by control of the processor 102 included in the UE 100 shown in FIG. 5.

More specifically, an apparatus for configured to operate in a wireless communication system (e.g., wireless device) comprises at least processor, and at least one computer memory operably connectable to the at least one processor. The at least one processor is configured to perform operations comprising receiving an instruction to activate a cell group via another cell group; after receiving the instruction, determining whether to skip a random access procedure to the cell group based on at least one of i) a validity of a time alignment between the UE and the cell group or ii) a beam quality of a beam selected for the cell group; performing a frequency band switching from a first frequency band to a second frequency band based on a determination to skip the random access procedure; and performing a transmission to the cell group in the second frequency band while skipping the random access procedure to the cell group. The UE may stop monitoring a control channel on one or more cells in the cell group in the first frequency band. The UE may monitor a control channel on the one or more cells in the cell group in the second frequency band.

Furthermore, the method in perspective of the network node described above may be performed by second wireless device 100 shown in FIG. 2, the device 100 shown in FIG. 3, and/or the second wireless device 200 shown in FIG. 4.

More specifically, the network node comprises at least one transceiver, at least processor, and at least one computer memory operably connectable to the at least one processor and storing instructions that, based on being executed by the at least one processor, perform operations.

The operations may comprise transmitting, to a UE, a configuration for at least one of a first cell group and a second cell group; transmitting, to the UE, a configuration for a first frequency band in which the UE stops monitoring a control channel on one or more cells in the second cell group; transmitting, to the UE, an instruction to activate the second cell group via the first cell group; and receiving, from the UE, a transmission in a second frequency band in which the UE monitors a control channel on the one or more cells in the cell group, with a random access procedure by the UE to the second cell group skipped. Whether to skip the random access procedure to the second cell group may be determined based on at least one of i) a validity of a time alignment between the UE and the second cell group, or ii) a beam quality of a beam selected for the second cell group. A frequency band switching may be performed from the first frequency band to the second frequency band based on a determination to skip the random access procedure.

The present disclosure can have various advantageous effects.

For example, the network can perform a data transmission on time after the UE activates SCG successfully without the random access procedure on SCG. This is because the network may not know quickly unless the UE indicates that SCG is activated without the RACH procedure.

For example, since the UE may avoid to select new BWP which includes RACH configuration for random access procedure, the network can control the situation that many other UEs select a BWP which includes RACH configuration.

Advantageous effects which can be obtained through specific embodiments of the present disclosure are not limited to the advantageous effects listed above. For example, there may be a variety of technical effects that a person having ordinary skill in the related art can understand and/or derive from the present disclosure. Accordingly, the specific effects of the present disclosure are not limited to those explicitly described herein, but may include various effects that may be understood or derived from the technical features of the present disclosure.

Claims in the present disclosure can be combined in a various way. For instance, technical features in method claims of the present disclosure can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method. Other implementations are within the scope of the following claims.

## Claims

1. A method performed by a wireless device, the method comprising:
receiving (S1201), on a first cell group, an instruction to activate a second cell group;
after receiving the instruction, determining (S1203) that a random access procedure is not needed for activation of the second cell group based on i) a time alignment associated with the second cell group being valid, and ii) a beam quality of a beam for the second cell group being higher than a threshold;
autonomously performing (S1205) a frequency band switching from a first frequency band to a second frequency band based on the random access procedure not being needed; and
performing (S1207) a transmission to the second cell group in the second frequency band without the random access procedure to the second cell group, not monitoring a control channel on one or more cells of the second cell group in the first frequency band, monitoring a control channel on the one or more cells of the second cell group in the second frequency band,
wherein a random access configuration is unavailable in the second frequency band, and
wherein the random access configuration comprises a resource configuration used to perform the random access procedure.

2. The method of claim 1, wherein the instruction is configured or signalled by the first cell group via at least one of downlink control information, DCI, a media access control, MAC, control element, CE, or a radio resource control, RRC, message.

3. The method of claim 1, wherein the time alignment is valid while a time alignment timer for the second cell group is running,
wherein the time alignment being valid comprises an uplink timing being aligned with the second cell group, and
wherein the time alignment timer is started or restarted upon receiving information informing the uplink timing towards the second cell group.

4. The method of claim 1, wherein the first cell group is a master cell group, MCG, and the second cell group is a secondary cell group, SCG,
wherein the MCG comprises a primary cell, PCell, and optionally one or more secondary cells, SCells, and
wherein the SCG comprises a primary secondary cell, PSCell, and optionally one or more SCells.

5. The method of claim 4, further comprising:
monitoring a physical downlink control channel, PDCCH, on the PSCell while the SCG is activated, and
stopping monitoring a PDCCH on the PSCell while the SCG is deactivated.

6. The method of claim 1, wherein the first frequency band comprises a dormant bandwidth part, BWP, in which a PDCCH is not monitored on the one or more cells of the second cell group,
wherein the second frequency band comprises a non-dormant BWP in which a PDCCH is monitored on the one or more cells of the cell group, and
wherein the frequency band switching comprises a BWP switching from the dormant BWP to the non-dormant BWP.

7. The method of claim 1, wherein the method is performed by a user equipment, UE, and wherein the UE is in communication with at least one of a mobile device, a network, or autonomous vehicles other than the UE.

8. A wireless device (100) comprising:
at least one transceiver (106);
at least one processor (102); and
at least one computer (104) memory operably connectable to the at least one processor and storing instructions that, based on being executed by the at least one processor, perform operations comprising:
receiving, on a first cell group via the at least one transceiver, an instruction to activate a second cell group;
after receiving the instruction, determining that a random access procedure is not needed for activation of the second cell group based on i) a time alignment associated with the second cell group, and ii) a beam quality of a beam for the second cell group being higher than a threshold;
autonomously performing a frequency band switching from a first frequency band to a second frequency band based on the random access procedure not being needed; and
performing a transmission to the second cell group in the second frequency band without the random access procedure to the second cell group, not monitoring a control channel on one or more cells of the second cell group in the first frequency band, monitoring a control channel on the one or more cells of the second cell group in the second frequency band,
wherein a random access configuration is unavailable in the second frequency band, and
wherein the random access configuration comprises a resource configuration used to perform the random access procedure.

9. The wireless device of claim 8, wherein the operations further comprise operations of the method of any of claims 2 to 7.

## Patentansprüche

1. Verfahren, das von einer drahtlosen Vorrichtung durchgeführt wird, wobei das Verfahren Folgendes umfasst:
Empfangen (S1201), in einer ersten Zellgruppe, einer Anweisung zum Aktivieren einer zweiten Zellgruppe;
nach dem Empfangen der Anweisung, Bestimmen (S1203), dass kein Zufallszugriffsverfahren für die Aktivierung der zweiten Zellgruppe erforderlich ist, basierend darauf, dass i) eine mit der zweiten Zellgruppe verbundene Zeitausrichtung gültig ist und ii) eine Strahlqualität eines Strahls für die zweite Zellgruppe höher als ein Schwellenwert ist;
autonomes Durchführen (S1205) eines Frequenzbandwechsels von einem ersten Frequenzband zu einem zweiten Frequenzband, basierend darauf, dass das Zufallszugriffsverfahren nicht erforderlich ist; und
Durchführen (S1207) einer Übertragung an die zweite Zellgruppe im zweiten Frequenzband ohne das Zufallszugriffsverfahren für die zweite Zellgruppe,
kein Überwachen eines Steuerkanals an einer oder mehreren Zellen der zweiten Zellgruppe im ersten Frequenzband,
Überwachen eines Steuerkanals auf der einen oder den mehreren Zellen der zweiten Zellgruppe im zweiten Frequenzband,
wobei eine Zufallszugriffskonfiguration im zweiten Frequenzband nicht verfügbar ist, und
wobei die Zufallszugriffskonfiguration eine Ressourcenkonfiguration umfasst, die zum Durchführen des Zufallszugriffsverfahrens verwendet wird.

2. Verfahren nach Anspruch 1, wobei die Anweisung von der ersten Zellgruppe über mindestens eines von Downlink-Steuerungsinformationen, DCI, einem Medienzugriffssteuerungs, MAC,-Steuerelement, CE, oder einer Funkressourcensteuerungs-, RRC,-Meldung konfiguriert oder signalisiert wird.

3. Verfahren nach Anspruch 1, wobei die Zeitausrichtung gültig ist, während ein Zeitausrichtungstimer für die zweite Zellgruppe läuft,
wobei die gültige Zeitausrichtung einen mit der zweiten Zellgruppe ausgerichteten Uplink-Zeitpunkt umfasst, und
wobei der Zeitausrichtungstimer nach dem Empfangen von Informationen, die der zweiten Zellgruppe den Uplink-Zeitpunkt mitteilen, gestartet oder neu gestartet wird.

4. Verfahren nach Anspruch 1, wobei die erste Zellgruppe eine Master-Zellgruppe, MCG, ist und die zweite Zellgruppe eine sekundäre Zellgruppe, SCG, ist,
wobei die MCG eine Primärzelle, PCell, und optional eine oder mehrere Sekundärzellen, SCells, umfasst, und
wobei die SCG eine primäre Sekundärzelle, PSCell, und optional eine oder mehrere SCells umfasst.

5. Verfahren nach Anspruch 4, das ferner Folgendes umfasst:
Überwachen eines physikalischen Downlink-Steuerkanals, PDCCH, auf der PSCell, während die SCG aktiviert ist, und
Stoppen des Überwachens eines PDCCH auf der PSCell, während die SCG deaktiviert ist.

6. Verfahren nach Anspruch 1, wobei das erste Frequenzband einen ruhenden Bandbreitenteil, BWP, umfasst, in dem ein PDCCH auf der einen oder den mehreren Zellen der zweiten Zellgruppe nicht überwacht wird,
wobei das zweite Frequenzband einen nicht ruhenden BWP umfasst, in dem ein PDCCH auf der einen oder den mehreren Zellen der Zellgruppe überwacht wird, und wobei der Frequenzbandwechsel einen BWP-Wechsel von dem ruhenden BWP zu dem nicht ruhenden BWP umfasst.

7. Verfahren nach Anspruch 1, wobei das Verfahren von einer Benutzerausrüstung, UE, durchgeführt wird, und
wobei die UE mit mindestens einem von einem mobilen Gerät, einem Netzwerk oder autonomen Fahrzeugen außer der UE kommuniziert.

8. Drahtlose Vorrichtung (100), die Folgendes umfasst:
mindestens einen Transceiver (106);
mindestens einen Prozessor (102); und
mindestens einen Speicher eines Computers (104), der betriebsfähig mit dem mindestens einen Prozessor verbunden werden kann und Anweisungen speichert, die auf Basis dessen, dass sie von dem mindestens einen Prozessor ausgeführt werden,
Operationen durchführen, die Folgendes umfassen:
Empfangen, in einer ersten Zellgruppe über den mindestens einen Transceiver, einer Anweisung zum Aktivieren einer zweiten Zellgruppe;
nach dem Empfangen der Anweisung, Bestimmen, dass ein Zufallszugriffsverfahren für die Aktivierung der zweiten Zellgruppe nicht erforderlich ist, basierend auf i) einer mit der zweiten Zellgruppe verbundenen Zeitausrichtung und ii) einer Strahlqualität eines Strahls für die zweite Zellgruppe, die höher als ein Schwellenwert ist;
selbstständiges Durchführen eines Frequenzbandwechsels von einem ersten Frequenzband zu einem zweiten Frequenzband, basierend darauf, dass der Zufallszugriffsverfahren nicht erforderlich ist; und
Durchführen einer Übertragung an die zweite Zellgruppe im zweiten Frequenzband ohne das Zufallszugriffsverfahren für die zweite Zellgruppe,
kein Überwachen eines Steuerkanals an einer oder mehreren Zellen der zweiten Zellgruppe im ersten Frequenzband,
Überwachen eines Steuerkanals auf der einen oder den mehreren Zellen der zweiten Zellgruppe im zweiten Frequenzband,
wobei eine Zufallszugriffskonfiguration im zweiten Frequenzband nicht verfügbar ist, und
wobei die Zufallszugriffskonfiguration eine Ressourcenkonfiguration umfasst, die zum Durchführen des Zufallszugriffsverfahrens verwendet wird.

9. Drahtlose Vorrichtung nach Anspruch 8, wobei die Operationen ferner Operationen eines Verfahrens nach einem der Ansprüche 2 bis 7 umfassen.

## Revendications

1. Procédé réalisé par un dispositif sans fil, le procédé comprenant :
la réception (S1201), sur un premier groupe de cellules, d'une instruction pour activer un second groupe de cellules ;
après réception de l'instruction, la détermination (S1203) qu'une procédure d'accès aléatoire n'est pas nécessaire pour l'activation du second groupe de cellules sur la base du fait i) qu'un alignement temporel associé au second groupe de cellules est valide, et ii) qu'une qualité de faisceau d'un faisceau pour le second groupe de cellules est supérieure à un seuil ;
la réalisation de manière autonome (S1205) d'une commutation de bande de fréquences d'une première bande de fréquences à une seconde bande de fréquences quand la procédure d'accès aléatoire n'est pas nécessaire ; et
la réalisation (S1207) d'une émission vers le second groupe de cellules dans la seconde bande de fréquences sans la procédure d'accès aléatoire au second groupe de cellules, la non-surveillance d'un canal de contrôle sur une ou plusieurs cellules du second groupe de cellules dans la première bande de fréquences,
la surveillance d'un canal de contrôle sur les une ou plusieurs cellules du second groupe de cellules dans la seconde bande de fréquences,
dans lequel une configuration d'accès aléatoire n'est pas disponible dans la seconde bande de fréquences, et
dans lequel la configuration d'accès aléatoire comprend une configuration de ressources utilisée pour réaliser la procédure d'accès aléatoire.

2. Procédé selon la revendication 1, dans lequel l'instruction est configurée ou signalée par le premier groupe de cellules via au moins un parmi une information de contrôle de liaison descendante, DCI, un élément de contrôle, CE, de contrôle d'accès au support, MAC, ou un message de contrôle de ressource radio, RRC.

3. Procédé selon la revendication 1, dans lequel l'alignement temporel est valide alors qu'une temporisation d'alignement temporel pour le second groupe de cellules est en cours d'exécution,
dans lequel l'alignement temporel valide comprend une synchronisation de liaison montante alignée avec le second groupe de cellules, et
dans lequel le temporisateur d'alignement temporel est démarré ou redémarré lors de la réception d'informations signalant la synchronisation de liaison montante vers le second groupe de cellules.

4. Procédé selon la revendication 1, dans lequel le premier groupe de cellules est un groupe de cellules maîtresses, MCG, et le second groupe de cellules est un groupe de cellules secondaires, SCG,
dans lequel le MCG comprend une cellule primaire, PCell, et facultativement une ou plusieurs cellules secondaires, SCells, et
dans lequel le SCG comprend une cellule secondaire primaire, PSCell, et facultativement une ou plusieurs SCells.

5. Procédé selon la revendication 4, comprenant en outre :
la surveillance d'un canal physique de contrôle de liaison descendante, PDCCH, sur la PSCell alors que le SCG est activé, et
l'arrêt de la surveillance d'un PDCCH sur la PSCell alors que le SCG est désactivé.

6. Procédé selon la revendication 1, dans lequel la première bande de fréquences comprend une partie de bande passante, BWP, dormante, dans laquelle un PDCCH n'est pas surveillé sur les une ou plusieurs cellules du second groupe de cellules, dans lequel la seconde bande de fréquences comprend une BWP non dormante dans laquelle un PDCCH est surveillé sur les une ou plusieurs cellules du groupe de cellules, et
dans lequel la commutation de bande de fréquences comprend une commutation de BWP de la BWP dormante à la BWP non dormante.

7. Procédé selon la revendication 1, dans lequel le procédé est réalisé par un équipement utilisateur, UE, et
dans lequel l'UE est en communication avec au moins l'un parmi un dispositif mobile, un réseau ou des véhicules autonomes autres que l'UE.

8. Dispositif sans fil (100) comprenant :
au moins un émetteur-récepteur (106) ;
au moins un processeur (102) ; et
au moins une mémoire d'ordinateur (104) pouvant être connectée en fonctionnement à l'au moins un processeur et stockant des instructions qui, sur la base de leur exécution par l'au moins un processeur, réalisent des opérations comprenant :
la réception, sur un premier groupe de cellules via l'au moins un émetteur-récepteur, d'une instruction pour activer un second groupe de cellules ;
après réception de l'instruction, la détermination qu'une procédure d'accès aléatoire n'est pas nécessaire pour l'activation du second groupe de cellules sur la base i) d'un alignement temporel associé au second groupe de cellules, et ii) d'une qualité de faisceau d'un faisceau pour le second groupe de cellules supérieure à un seuil ;
la réalisation de manière autonome d'une commutation de bande de fréquences d'une première bande de fréquences à une seconde bande de fréquences quand la procédure d'accès aléatoire n'est pas nécessaire ; et
la réalisation d'une émission vers le second groupe de cellules dans la seconde bande de fréquences sans la procédure d'accès aléatoire au second groupe de cellules,
la non-surveillance d'un canal de contrôle sur une ou plusieurs cellules du second groupe de cellules dans la première bande de fréquences,
la surveillance d'un canal de contrôle sur les une ou plusieurs cellules du second groupe de cellules dans la seconde bande de fréquences,
dans lequel une configuration d'accès aléatoire n'est pas disponible dans la seconde bande de fréquences, et
dans lequel la configuration d'accès aléatoire comprend une configuration de ressources utilisée pour réaliser la procédure d'accès aléatoire.

9. Dispositif sans fil selon la revendication 8, dans lequel les opérations comprennent en outre des opérations du procédé selon l'une quelconque des revendications 2 à 7.
